(19) Europäisches Patentamt
European Patent Office
Office européen des brevets

(11) **EP 4 518 518 A1**

(12) **EUROPEAN PATENT APPLICATION**
published in accordance with Art. 153(4) EPC

(43) Date of publication:
**05.03.2025 Bulletin 2025/10**

(21) Application number: **23796852.4**

(22) Date of filing: **27.04.2023**

(51) International Patent Classification (IPC):
*H04W 72/23* (2023.01)    *H04W 72/12* (2023.01)
*H04L 5/00* (2006.01)    *H04L 1/00* (2006.01)

(52) Cooperative Patent Classification (CPC):
**H04L 1/00; H04L 5/00; H04W 72/12; H04W 72/23**

(86) International application number:
**PCT/KR2023/005793**

(87) International publication number:
**WO 2023/211210 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 27.04.2022  KR 20220052396
08.05.2022  US 202263339508 P
11.08.2022  KR 20220100896
29.09.2022  KR 20220124753

(71) Applicant: **LG Electronics Inc.**
**Yeongdeungpo-gu**
**Seoul 07336 (KR)**

(72) Inventors:
• **CHOI, Seunghwan**
  **Seoul 06772 (KR)**
• **YANG, Suckchel**
  **Seoul 06772 (KR)**
• **KIM, Seonwook**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND APPARATUS FOR MONITORING SIGNAL IN WIRELESS COMMUNICATION SYSTEM**

(57)    A method and apparatus for monitoring a signal in a wireless communication system, disclosed in the present specification, may monitor a PDCCH candidate for a DCI format on the basis of a CCE index. The DCI format is monitored on a scheduling cell and schedules PDSCHs or PUSCHs on a plurality of scheduled cells.

【Fig. 4】

```
┌────────────────────────────────────────────────┐
│ Determine CCE index corresponding to PDCCH     │──── S401
│ candidate                                       │
└────────────────────────────────────────────────┘
                        │
                        ▼
┌────────────────────────────────────────────────┐
│ Monitor PDCCH candidate based on CCE index     │──── S403
└────────────────────────────────────────────────┘
```

**Description**

**TECHNICAL FIELD**

The present disclosure relates to a method and apparatus for use in a wireless communication system.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

**DISCLOSURE**

**TECHNICAL PROBLEM**

An object of the present disclosure is to provide a signal monitoring method for efficiently monitoring a control signal in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

The present disclosure provides a method and apparatus for monitoring a signal in a wireless communication system.

In an aspect of the present disclosure, provided herein is a method of monitoring a control signal by a user equipment (UE) in a wireless communication system. The method includes: determining a control channel element (CCE) index corresponding to a physical downlink control channel (PDCCH) candidate; and monitoring the PDCCH candidate for a downlink control information (DCI) format on a scheduling cell based on the CCE index. Based on that the DCI format is a first DCI format for scheduling a physical downlink shared channel (PDSCH) or a physical uplink shared channel (PUSCH) on a single scheduled cell, the CCE index is configured based on a value of a carrier indicator field (CIF) included in the DCI format. Based on that the DCI format is a second DCI format for scheduling PDSCHs or PUSCHs on a plurality of scheduled cells, the CCE index is configured independently for each specific combination of the plurality of scheduled cells.

In other aspects of the present disclosure, an apparatus, a processor and a storage medium for performing the signal monitoring method are provided.

The communication apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

ADVANTAGEOUS EFFECTS

According to an embodiment of the present disclosure, when communication devices monitor control signals, the communication devices may perform more efficient signal monitoring based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIG. 4 is diagrams for explaining a signal monitoring method according to an embodiment of the present disclosure.
FIGS. 5 to 8 illustrate devices according to an embodiment of the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP technical specification (TS) 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

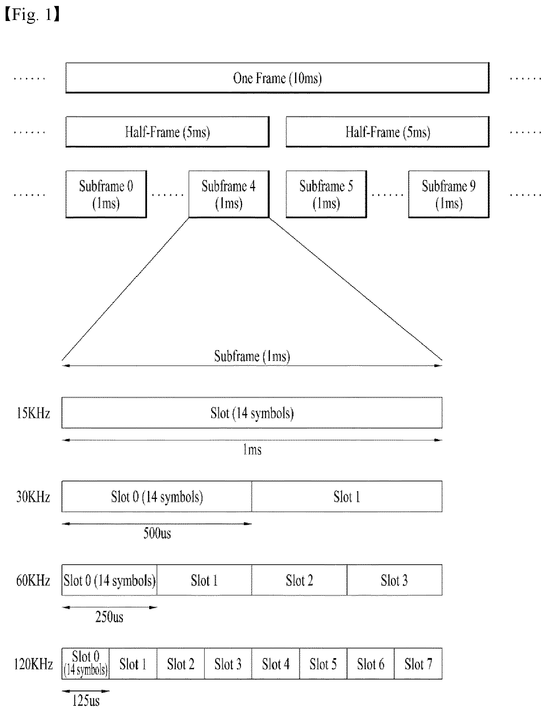

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |

(continued)

| SCS (15*2^u) | $N^{slot}_{symb}$ | $N^{frame,u}_{slot}$ | $N^{subframe,u}_{slot}$ |
|---|---|---|---|
| 60KHz (u=2) | 14 | 40 | 4 |
| 120KHz (u=3) | 14 | 80 | 8 |
| 240KHz (u=4) | 14 | 160 | 16 |
| * $N^{slot}_{simb}$: number of symbols in a slot<br>* $N^{frame,u}_{slot}$: number of slots in a frame<br>* $N^{frame,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | $N^{slot}_{simb}$ | $N^{fiame,u}_{slot}$ | $N^{5subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 242.50MHz - 52600MHz | 60, 120, 240kHz |

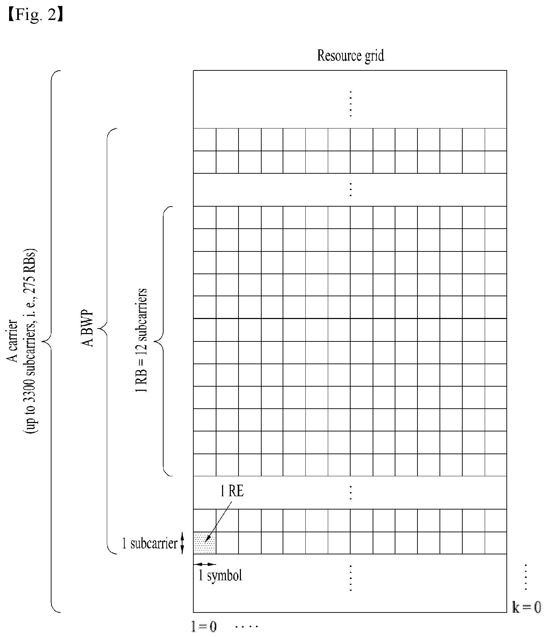

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs $\{m, M+m, 2M+m, 3M+m,...\}$. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a user equipment (UE) receives information from a base station (BS) in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

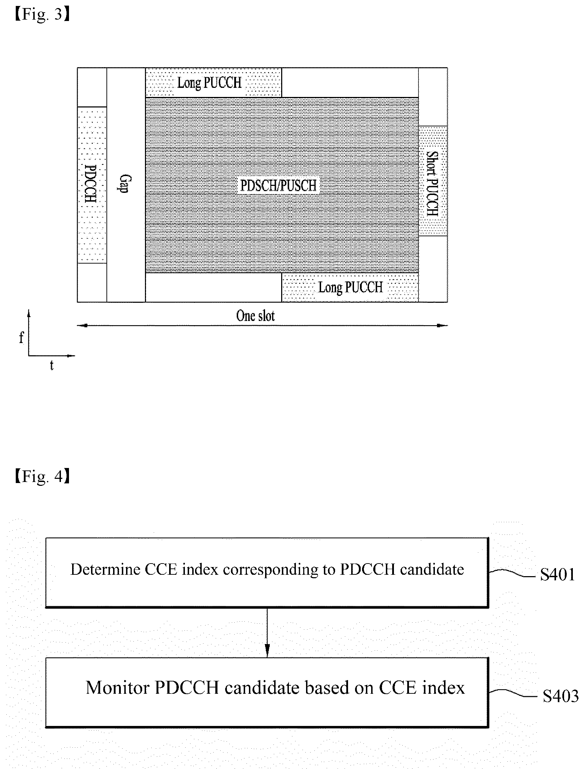

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a BS may be, for example, a gNode B (gNB).

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time-/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 4 shows DCI formats transmitted over the PDCCH.

[Table 4]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH ·in one cell |
| 1_1 | Scheduling of PDSCH in one cell, and or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 1_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 5 shows the usage of the PDCCH and transport channels according to the type of RNTI. Here, the transport channel means a transport channel related to data carried by a PDSCH/PUSCH scheduled by the PDCCH.

[Table 5]

| RNTI | Usage | Transport Channel |
|---|---|---|
| P-RNTI | Paging and System Information change notification | PCH(Paging Channel) |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS(Modulation and Coding Scheme)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |
| CS(Configured Scheduling)-RNTI | Configured scheduled unicast transmission (activation, reactivation and retransmission) | DL-SCH, UL-SCH |
| CS-RNTI | Configured scheduled unicast transmission (deactivation) | N/A |
| TPC(Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emption in DL | N/A |
| SFI(Slot Format Indication)-RNTI | Slot Format Indication on the given cell | N/A |
| SP(Semi-persistent)-CSI(Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.

- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (= 6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.

- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 6 shows PDCCH search spaces.

[Table 6]

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | Paging System Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.

- searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

## DCI for scheduling PDSCHs or PUSCHs on multiple serving cells

The above contents are applicable in combination with methods proposed in the present disclosure, which will be described later. Alternatively, the contents may clarify the technical features of the methods proposed in the present disclosure.

In addition, the following methods may be equally applied to the above-described NR system or shared spectrum (licensed bands). Thus, it is obvious that the terms, expressions, and structures in this document may be modified to be suitable for the system in order to implement the technical idea of the present disclosure in the corresponding system.

In Rel-18, to reduce DCI overhead required for PDSCH/PUSCH scheduling, in Rel-18 in a carrier aggregation (CA) scenario where a plurality of cells are configured, a multi-cell scheduling (multi-CC scheduling) method of scheduling multiple serving cells/CCs simultaneously with a single piece of DCI may be considered (based on the justification shown in Table 7). In the present disclosure, the expression 'scheduling of multiple cells' may be understood as 'scheduling of a PDSCH or PUSCH to be transmitted in each of multiple cells.' In other words, multi-cell DCI is DCI used to schedule PDSCHs or PUSCHs on different cells.

Table 7 may be understood as a justification for supporting such DCI in Rel-18, serving as one of the motivations for the introduction of the DCI (PDCCH).

[Table 7]

| Excerpted from RP-220834 |
| --- |
| NR supports a wide range of spectrum in different frequency ranges. It is expected that there will be increasing availability of spectrum in the market for 5G Advanced possibly due to refarming from the bands originally used for previous cellular generation networks. Especially for low frequency FR1 bands, the available spectrum blocks tend to be more fragmented and scattered with narrower bandwidth. For FR2 bands and some FR1 bands, the available spectrum can be wider such that intra-band multi-carrier operation is necessary. To meet different spectrum needs, it is important to ensure that these scattered spectrum bands or wider bandwidth spectrum can be utilized in a more spectral/power efficient and flexible manner, thus providing higher throughput and decent coverage in the network.<br><br>One motivation is to increase flexibility and spectral/power efficiency on scheduling data over multiple cells including intra-band cells and inter-band cells. The current scheduling mechanism only allows scheduling of single cell PUSCH/PDSCH per a scheduling DCI. With more available scattered spectrum bands or wider bandwidth spectrum, the need of simultaneous scheduling of multiple cells is expected to be increasing. To reduce the control overhead, it is beneficial to extend from single-cell scheduling to multi-cell PUSCH/PDSCH scheduling with a single scheduling DCI. Meanwhile, trade-off between overhead saving and scheduling restriction has to be taken into account. |

Accordingly, the present disclosure proposes a method for monitoring a PDCCH for DCI (multi-cell DCI) for performing the multi-cell scheduling as well as a method for configuring associated PDCCH candidates.

In the proposed methods described below, for convenience of explanation, DCI for performing multi-cell scheduling is denoted as m-cc DCI, and DCI for performing conventional single-cell scheduling is denoted as s-cc DCI. In addition, DCI scheduling a PDSCH and DCI scheduling a PUSCH are collectively referred to as m-cc DCI or s-cc DCI without differentiation. In some cases, the scheduled PDSCH and/or PUSCH may be referred to as a PDSCH/PUSCH (or PxSCH).

In the present disclosure, the term 'cell' may be interpreted according to the context. For example, a cell may refer to a serving cell. In addition, a cell may be composed of one DL component carrier (CC) and one to two UL CCs, but the methods described later are not limited to this configuration. In the following, unless otherwise specified, the terms 'cell' and 'CC' may be used interchangeably. Also, a cell/CC may be substituted and applied as an (active) BWP within a serving cell. Furthermore, unless otherwise specified, the term 'cell/CC' in the methods described later may be used as a concept encompassing a primary cell (PCell), a secondary cell (SCell), primary SCell (PSCell), etc., which may be configured/expressed in CA/DC (dual connectivity) scenarios.

A cell (or CC) that schedules a PDSCH/PUSCH (DL assignment or UL grant) may be referred to as a scheduling cell (or scheduling CC). A cell where the PDSCH/PUSCH scheduled through the scheduling cell is actually transmitted may be referred to as a scheduled cell (or scheduled CC). When the scheduling cell and the scheduled cell are the same, it is called self-carrier scheduling, and when the scheduling cell and the scheduled cell are different, it is referred to as cross-carrier scheduling.

Tables 8 and 9 illustrate information elements (IEs) related to cross-carrier scheduling specified in 3GPP TS 38.331.

[Table 8]

# – CrossCarrierSchedulingConfig

The IE CrossCarrierSchedulingConfig is used to specify the configuration when the cross-carrier scheduling is used in a cell.

CrossCarrierSchedulingConfig information element

```
-- ASN1START
-- TAG-CROSSCARRIERSCHEDULINGCONFIG-START

CrossCarrierSchedulingConfig ::=      SEQUENCE {
    schedulingCellInfo              CHOICE {
        own                     SEQUENCE {          -- Cross carrier scheduling: scheduling cell
            cif-Presence            BOOLEAN
        },
        other                   SEQUENCE {          -- Cross carrier scheduling: scheduled cell
            schedulingCellId            ServCellIndex,
            cif-InSchedulingCell        INTEGER (1..7)
        }
    },
    ...,
    [[
    carrierIndicatorSize-r16        SEQUENCE {
        carrierIndicatorSizeDCI-1-2-r16     INTEGER (0..3),
        carrierIndicatorSizeDCI-0-2-r16     INTEGER (0..3)
    }                                               OPTIONAL, -- Cond CIF-PRESENCE
    enableDefaultBeamForCCS-r16     ENUMERATED {enabled}              OPTIONAL -- Need S
    ]],
    [[
    ccs-BlindDetectionSplit-r17     ENUMERATED {oneSeventh, threeFourteenth, twoSeventh, threeSeventh,
                            oneHalf, fourSeventh, fiveSeventh, spare1}    OPTIONAL -- Need R
    ]]
}

-- TAG-CROSSCARRIERSCHEDULINGCONFIG-STOP
-- ASN1STOP
```

[Table 9]

| CrossCarrierSchedulingConfig field descriptions |
|---|
| cif-Presence<br>The field is used to indicate whether carrier indicator field is present (value true) or not (value false) in PDCCH DCI formats, see TS 38.213 [13]. If cif-Presence is set to true, the CIF value indicating a grant or assignment for this cell is 0. |
| cif-InSchedulingCell |

(continued)

| CrossCarrierSchedulingConfig field descriptions |
| --- |
| The field indicates the CIF value used in the scheduling cell to indicate a grant or assignment applicable for this cell, see TS 38.213 [13]. |
| other<br>Parameters for cross-carrier scheduling, i.e., a serving cell is scheduled by a PDCCH on another (scheduling) cell. The network configures this field only for SCells. |
| own<br>Parameters for self-scheduling, i.e., a serving cell is scheduled by its own PDCCH. |
| schedulingCellId<br>Indicates which cell signals the downlink allocations and uplink grants, if applicable, for the concerned SCell. In case the UE is configured with DC, the scheduling cell is part of the same cell group (i.e. MCG or SCG) as the scheduled cell. |

In the NR system, a cross-carrier scheduling (CCS) configuration may be configured by a higher layer parameter, CrossCarrierSchedulingConfig as shown in Tables 8 and 9. For DCI that schedules a PDSCH or PUSCH (e.g., DCI format 0_1/0_2/1_1/1_2) a carrier indicator field (CIF) value is configured. This value becomes 0 for its own cell and ranges from 1 to 7 for other cells (configured by cif-InSchedulingCell). Additionally, as shown in Table 10, a configured CIF value corresponds to the value of n_CI and is used for determining PDCCH candidates. In this case, PDCCH monitoring corresponding to a search space set (SS set) configured for a scheduled cell is performed at a PDCCH monitoring occasion (MO) associated with an SS set having the same index as the SS set in a scheduling cell. In addition, the number of PDCCH candidates for each aggregation level (AL) configured in the SS set of the scheduled cell is inherited as it is, and the same number of PDCCH candidates is applied during PDCCH monitoring on the scheduled cell based on the corresponding SS set in the scheduling cell. The PDCCH MO may be determined for each SS set s within a CORESET p. Up to 10 SS sets may be associated with a single CORESET, and each SS set may be identified by the SS set index.

[Table 10]

| |
| --- |
| For each DL BWP configured to a UE in a serving cell, the UE is provided by higher layers with $S \leq 10$ search space sets where, for each search space set from the $S$ search space sets, the UE is provided the following by *SearchSpace:*<br><br>- a PDCCH monitoring periodicity of $k_s$ slots and a PDCCH monitoring offset of $o_s$ slots, by *monitoringSlotPeriodicityAndOffset* or by *monitoringSlotPeriodicityAndOffset-r17*<br><br>- a PDCCH monitoring pattern within a slot, indicating first symbol(s) of the CORESET for PDCCH monitoring within each slot where the UE monitors PDCCH, by *monitoringSymbolsWithinSlot*<br><br>- a duration of $T_s < k_s$ indicating a number of slots that the search space set s exists by *duration,* or a number of slots in consecutive groups of slots where the search space set *s* can exist by *duration-r17*<br><br>A UE determines a PDCCH monitoring occasion on an active DL BWP from the PDCCH monitoring periodicity, the PDCCH monitoring offset, and the PDCCH monitoring pattern within a slot. If *monitoringSlotsWithinSlotGroup* is not provided, the UE determines that PDCCH monitoring occasions exist in a slot with number $n_{s,f}^{\mu}$ [4, TS 38.211] in a frame with number $n_f$ if $(n_f N_{slot}^{frame,\mu} + n_{s,f}^{\mu} - o_s) \bmod k_s = 0$. The UE monitors PDCCH candidates for search space set s for $T_s$ consecutive slots, starting from slot $n_{s,f}^{\mu}$, and does not monitor PDCCH candidates for search space set $s$ for the next $k_s - T_s$ consecutive slots. If *monitoringSlotsWithinSlotGroup* is provided, for search space set $s$, the UE determines that the slot with number $n_{s,f}^{\mu}$ [4, TS 38.211] in a frame with number $n_f$ satisfying $(n_f N_{slot}^{frame,\mu} + n_{s,f}^{\mu} - o_s) \bmod k_s = 0$ $L_s$ slots and that PDCCH monitoring occasions exist in $T_s / L_s$ consecutive groups of slots starting from the first group, where $L_l$ is the size of *monitoringSlotsWithinSlotGroup*. The UE monitors PDCCH candidates for search space set s within each of the $T_s/L_s$ consecutive groups of slots according to *monitoringSlotsWithinSlotGroup,* starting from slot $n_{s,f}^{\mu}$, and does not monitor PDCCH candidates for search space set $s$ for the next $k_s - T_s$ consecutive slots. |

| |
|---|
| For a search space set $s$ associated with CORESET $p$, the CCE indexes for aggregation level $L$ corresponding to PDCCH candidate $m_{s,n_{CI}}^{(L)}$ of the search space set in slot $n_{s,f}^{\mu}$ for an active DL BWP of a serving cell corresponding to carrier indicator field value $n_{CI}$ are given by $$L \cdot \left\{ \left( Y_{p,n_{s,f}^{\mu}} + \left\lfloor \frac{m_{s,n_{CI}}^{(L)} \cdot N_{CCE,p}}{L \cdot M_{s,\max}^{(L)}} \right\rfloor + n_{CI} \right) \bmod \lfloor N_{CCE,p}/L \rfloor \right\} + i$$ where for any CSS, $Y_{p,n_{s,f}^{\mu}} = 0$ ; for a USS, $Y_{p,n_{s,f}^{\mu}} = \left( A_p \cdot Y_{p,n_{s,f}^{\mu}-1} \right) \bmod D$ , $Y_{p-1} = n_{\mathrm{RNTI}} \neq 0$, $A_p = 39827$ for $p \bmod 3 = 0$, $A_p = 39829$ for $p \bmod 3 = 1$, $A_p = 39339$ for $p \bmod 3 = 2$, and $D = 65537$; $i = 0, \cdots , L - 1$; $N_{CCE,p}$ is the number of CCEs, numbered from 0 to $N_{CCE,p}$ - 1, in CORESET $p$ and, if any, per RB set; $n_{CI}$ is the carrier indicator field value if the UE is configured with a carrier indicator field by *CrossCarrierSchedulingConfig* for the serving cell on which PDCCH is monitored, except for scheduling of the serving cell from the same serving cell in which case $n_{CI} = 0$; otherwise, including for any CSS, $n_{CL} = 0$; $m_{s,n_{CI}}^{(L)} = 0, \cdots , M_{s,n_{CI}}^{(L)} - 1$ , where $M_{s,n_{CI}}^{(L)}$ is the number of PDCCH candidates the UE is configured to monitor for aggregation level $L$ of a search space set $s$ for a serving cell corresponding to $n_{CI}$ ; for any CSS, $M_{s,\max}^{(L)} = M_{s,0}^{(L)}$ ; for a USS, $M_{s,\max}^{(L)}$ is the maximum of $M_{s,n_{CI}}^{(L)}$ over all configured $n_{CI}$ values for a CCE aggregation level $L$ of search space set $S$ ; the RNTI value used for $n_{\mathrm{RNTI}}$ is the C-RNTI. |

For example, SS set #s may be configured as follows for cell #1 and cell #2.

- SS set #s configured for cell #1: The number of PDCCH candidates for a specific AL n is set to N_1(n).
- SS set #s configured for cell #2: The number of PDCCH candidates for a specific AL n is set to N_2(n).

In this case, if cross-carrier scheduling is configured such that cell #1 is determined as the scheduling cell for cell #2, the UE may perform monitoring of PDCCHs at the PDCCH MOs configured in SS set #s on cell #1 as follows. Specifically, a PDCCH transmitted on cell #1 may schedule data transmitted on cell #2 (e.g., PDSCH or PUSCH). The relationship established between cell #1 and cell #2 as described above may conveniently be referred to as a CCS relationship. Additionally, monitoring PDCCHs may imply monitoring PDCCH candidates.

- For DCI formats configured in SS set #s of cell #1, N_1(n) PDCCH candidates are monitored for each AL n.
- For DCI formats configured in SS set #s of cell #2, N_2(n) PDCCH candidates are monitored for each AL n.

Operation Methods for m-cc DCI and s-cc DCI

In a scenario such as CA, which includes M cells (cell #1 to cell #M, where M is an integer greater than or equal to 1), when a connection relationship (e.g., CCS relationship) is established between a scheduling cell and remaining cells, one of the following options may be configured/applied for m-cc DCI, which is capable of scheduling multiple cells, simultaneously, and s-cc DCI, which is capable of scheduling schedule a single cell. For convenience of explanation, a single cell is denoted as cell #k (where k represents a cell index or k-th cell), and a set of two or more cells is denoted using a symbol of {}. For example, {cell #1, cell #2} means cell #1 and cell #2. An arbitrary set of M cells is denoted as {{cell #m}, M}. In this case, cell #m may refer to each cell within the set (m = 1, ..., M).

1.1-1 Option 1: M-cc DCI may always be defined to schedule {{cell #m}, M}. Here, M refers to an integer greater than or equal to 2. In other words, the m-cc DCI always schedules multiple cells simultaneously, and an operation of scheduling only a single cell through m-cc DCI may not be allowed. Cell #m may be a scheduling cell that receives the m-cc DCI (PDCCH) or a scheduled cell that is scheduled by the m-cc DCI.

1.1-1a Option 1a: M-cc DCI may always be defined to schedule {{cell #m}, M}. Here, M refers to an integer greater than or equal to 2. Cell #m may be a scheduled cell that is scheduled by the m-cc DCI.

1.1-2 Option 2: M-cc DCI may be defined to schedule either {{cell #m}, M} or a single cell (ref-cc) among {{cell #m}, M}. In other words, the m-cc DCI may schedule multiple cells simultaneously (multi-cell scheduling) or may schedule only one cell (single-cell scheduling). In this case, the single cell may be fixed to a specific cell (ref-cc). Single-cell scheduling through the m-cc DCI may not be allowed for cells other than the specific cell. Here, M refers to an integer greater than or equal to 2. Cell #m may be a scheduling cell that receives the m-cc DCI (PDCCH) or a scheduled cell that is scheduled by the m-cc DCI. The reference CC (ref-cc) refers to a specific cell among {{cell #m}, M} and may be predefined or configured implicitly or explicitly.

- Method of predefining or implicitly configuring ref-cc: Among {{cell #m}, M}, a cell with the lowest (or highest) index may be selected as ref-cc. Alternatively, if a PCell, PSCell, or PUCCH SCell is included in the set, the corresponding cell may be selected as the ref-cc. A scheduling cell may also be selected as the ref-cc. Further, among cells scheduled by the m-cc DCI, a cell that serves as the reference of CIF values may be determined as the ref-cc.
- Method of explicitly configuring ref-cc: The reference CC (ref-cc) may be configured semi-statically through higher layer signaling such as RRC or a MAC control element (CE) or configured dynamically through DCI. In this case, the signaled cell index may indicate a cell based on the pre-defined rule (or implicit configuration) described above.

1.1-2a Option 2a: M-cc DCI may be defined to schedule either {{cell #m}, M} or a single cell (ref-cc) among {{cell #m}, M}. Here, M refers to an integer greater than or equal to 2. Cell #m may be a scheduled cell that is scheduled by the m-cc DCI. The ref-cc refers to a specific cell among {{cell #m}, M} and may be predefined, implicitly configured, or explicitly configured. The methods described in 1.1-2 Option 2 may be used to configure the ref-cc.

1.1-3 Option 3: M-cc DCI may be defined to schedule {{cell #m}, M}. Here, M refers to an integer greater than or equal to 1. In other words, the m-cc DCI may schedule multiple cells simultaneously or may schedule only one cell. Compared to 1.1-2 Option 2, the one cell does not have to be fixed to a specific cell (ref-cc). Cell #m may be a scheduling cell that receives the m-cc DCI (PDCCH) or a scheduled cell that is scheduled by the m-cc DCI.

1.1-3a Option 3a: M-cc DCI may be defined to schedule {{cell #m}, M}. Here, M refers to an integer greater than or equal to 1. Cell #m may be a scheduled cell that is scheduled by the m-cc DCI.

For each of the above options, the PDCCH monitoring operation of the UE in a cell scheduling the m-cc DCI (PDCCH) may be defined as follows.

1.1-1 Option 1: The UE may expect to receive m-cc DCI configured according to 1.1-1 Option 1. Additionally, the UE may expect to receive s-cc DCI that self-schedules or cross-carrier schedules each cell belonging to {{cell #m}, M}, where m-cc DCI scheduling is configured to be performed.

1.1-1a Option 1a: The UE may expect to receive m-cc DCI configured according to 1.1-1a Option 1a. Additionally, the UE may expect to receive s-cc DCI that cross-carrier schedules one cell among {{cell #m}, M} or self-schedules a scheduling cell.

1.1-2 Option 2: The UE may expect to receive m-cc DCI configured according to 1.1-2 Option 2. Additionally, the UE may expect to receive s-cc DCI that self-schedules or cross-carrier schedules cells, except for a specific ref-cc, among cells belonging to {{cell #m}, M}, where m-cc DCI scheduling is configured to be performed.

1.1-2a Option 2a: The UE may expect to receive m-cc DCI configured according to 1.1-2a Option 2a. Additionally, the UE may expect to receive s-cc DCI that cross-carrier schedules one cell among {{cell #m}, M} or self-schedules a scheduling cell.

1.1-3 Option 3: The UE may expect to receive m-cc DCI configured according to Option 3. In this case, the UE may not expect to receive s-cc DCI that self-schedules or cross-carrier schedules any cell belonging to {{cell #m}, M}, where m-cc DCI scheduling is configured to be performed.

1.1-3a Option 3a: The UE may expect to receive m-cc DCI configured according to 1.1-3a Option 3a. Additionally, the UE may expect to receive s-cc DCI that self-schedules a scheduling cell. In this case, the UE may not expect to receive s-cc DCI that cross-carrier schedules one cell among {{cell #m}, M}.

The proposed methods described below may be characteristically applied to each of the above options.

For the methods described below, the proposed/calculated values in each method (e.g., the number of PDCCH candidates for each scheduled cell, BD counting method, BD budget, or multiplication or division of a specific value to apply weights) may result in integer values as the final results using the ceil or floor functions (unless otherwise specified)

[1] Method of Configuring CIF Field Value for m-cc DCI

In the conventional NR system, a CIF may be configured in s-cc DCI. The CIF value allows a scheduling cell and a scheduled cell to be connected during CCS. The number of scheduled cells related to conventional s-cc DCI is one. An SS set and/or a CCS-related configuration have been made for each cell. However, since m-cc DCI may simultaneously schedule a PDSCH/PUSCH for multiple cells, it may be necessary to determine which cell should be used as a reference for the SS set and/or CCS-related configuration among multiple scheduled cells. Hereinafter, proposed operations will be described for cases where m-cc DCI scheduling is configured for M cells, {cell #m}, M}.

For multiple scheduled CCs that are simultaneously scheduled through m-cc DCI, the configuration of an SS set and/or CIF value may be determined based on one of the following three criteria.

- Criterion 1: SS set #s for m-cc DCI may be configured, and a CIF value for SS set #s may also be configured. In this case, the SS set and CIF value may be configured for all possible CC combinations (the entire set of CCs) that may be scheduled simultaneously through the m-cc DCI. In other words, the SS set and CIF value may be configured specifically for the m-cc DCI. In this case, the CIF value may be configured to have a different value from a CIF (single-cell CIF) value configured for (single-cell scheduling) DCI-based (cross-carrier) scheduling (for a single CC). For example, for m-cc DCI capable of scheduling up to {cell #1, cell #2, cell #3} simultaneously, the CIF value and/or SS set #s for the m-cc DCI may be configured without distinguishing between a case where {cell #1, cell #2} are scheduled and a case where {cell #2, cell #3} are scheduled.
- Criterion 2: An SS set and/or CIF value may be configured for each CC combination capable of being scheduled simultaneously by m-cc DCI. In this case, the CIF value for each CC combination may be set to a different value from a CIF (single-cell CIF) value configured for (single-cell scheduling) DCI-based (cross-carrier) scheduling (for a single CC). For example, for m-cc DCI capable of scheduling up to {cell #1, cell #2, cell #3} simultaneously, SS set #s_A and/or CIF_A are configured for a case where the m-cc DCI schedules {cell #1, cell #2}. For a case where the m-cc DCI schedules {cell #2, cell #3}, SS set #s_B and/or CIF_B are configured. In another example, when one CC is scheduled by the m-cc DCI, for example, when the m-cc DCI schedules {cell #3}, SS set #s_C and/or CIF_C may be configured. If the m-cc DCI schedules all three CCs, that is, {cell #1, cell #2, cell #3}, SS set #s_D and/or CIF_D may be configured.
- Criterion 3: An SS set and/or CIF value may be configured for each CC capable of being scheduled by m-cc DCI. In this case, the CIF value for each CC may be set to the same value as a CIF value configured for (single-cell scheduling) DCI-based (cross-carrier) scheduling for the corresponding CC. For example, for m-cc DCI capable of scheduling up to {cell #1, cell #2, cell #3} simultaneously, if {cell #1, cell #2} are scheduled, SS set #s_1 and/or CIF_1 may be individually configured for cell #1, and SS set #s_2 and/or CIF_2 may be individually configured for cell #2 (and similarly, SS set #s_3 and/or CIF_3 may be individually configured for cell #3).

From the SS sets and/or CIF values configured based on Criterion 1/2/3, n_CI and/or the CCE positions of PDCCH candidates (sets) (corresponding to each n_CI value) may be determined (according to the methods described later). In this case, the PDCCH candidates (sets) determined from the CIF (and n_CI) values configured based on Criterion 1, Criterion 2, or Criterion 3 (corresponding to each n_CI value for the m-cc DCI) may be shared (SS sharing) regardless of the cell (combination) scheduled by the m-cc DCI. In other words, based on the SS sets and/or CIF values configured according to Criterion 1/2/3, one or multiple (e.g., N) n_CI values may be determined. When the N positions of the PDCCH candidate sets, which respectively correspond to the N n_CI values, are determined, m-cc DCI scheduling a specific cell (combination) corresponding to a specific CIF/n_CI value may be transmitted/received through any PDCCH candidate within the N PDCCH candidate sets. For example, m-cc DCI scheduling a cell (combination) corresponding to a specific CIF/n_CI value of A may be transmitted/received through a PDCCH candidate set corresponding to a different CIF/n_CI value of B.

According to the [Operation Methods for m-cc DCI and s-cc DCI] described above, CCs capable of being scheduled by m-cc DCI may also be configured to be schedulable by s-cc DCI. In this case, a CIF value for each CC capable of being scheduled by the m-cc DCI may be independently configured. That is, even when SS sets and/or CIF values are capable of being configured for multiple CCs according to [Criterion 1] or [Criterion 2], a CIF value for each CC may be separately configured for each of the multiple CCs. Therefore, it is necessary to distinguish between the CIF values for the m-cc DCI and the CIF values for the s-cc DCI.

When a single CIF value is configured for m-cc DCI according to [Criterion 1], one of the following methods may be applied.

- Method 1A: The CIF value for m-cc DCI may be independently configured. That is, the single CIF value may be configured through a separate SS set configuration specifically for the m-cc DCI.
- Method 2A: The CIF value for m-cc DCI may be configured as the CIF value of a specific representative cell (ref-cc) among M cells (i.e., {{cell #m}, M}) capable of being scheduled by the m-cc DCI. The ref-cc may be predefined or configured implicitly or explicitly.
- Method for predefining or implicitly configuring ref-cc: The ref-cc may be a cell with the lowest or highest index among {{cell #m}, M}. Alternatively, if a PCell, PSCell, or PUCCH SCell is included in the set, the cell may be selected as the ref-cc. A scheduling cell may also be selected as the ref-cc. Further, among cells scheduled by the m-cc DCI, a cell that serves as the reference of CIF values may be determined as the ref-cc.

- Method for explicitly configured ref-cc: The ref-cc may be semi-statically configured through higher layer signaling such as RRC or a MAC-CE. The ref-cc may also be dynamically configured through DCI. In this case, the signaled cell index may indicate a cell based on the pre-defined rule (or implicit configuration) described above.

- Method 3A: The CIF value for m-cc DCI may be set to a value obtained by adding an offset to the CIF value of a specific representative cell (ref-cc) among cells capable of being scheduled by the m-cc DCI. For example, the CIF value for the m-cc DCI may be determined as a value obtained by adding 1 to the highest/largest value among single-cell CIF values. The ref-cc may be defined/configured using the method described in [Method 2A]. The offset may be predefined or configured (e.g., through higher layer signaling).

When a CIF value is configured according to a CC combination scheduled by m-cc DCI based on [Criterion 2], one of the following methods may be applied.

- Method 1B: The CIF value may be independently configured for each CC combination. That is, the CIF value may be configured through a separate SS set configuration for each CC combination. For example, for m-cc DCI capable of scheduling up to {cell #1, cell #2, cell #3} simultaneously, a CIF value may be configured for each actually scheduled CC combination as shown in the following example.

[Table 11]

| CIF | Scheduled cell(s) |
|-----|-------------------|
| 0 | CC#0 |
| 1 | CC#1 |
| 2 | CC#2 |
| 3 | CC#0, CC#1 |
| 4 | CC#0, CC#2 |
| 5 | CC#1, CC#2 |
| 6 | CC#0, CC#1, CC#2 |

- Method 2B: The CIF value for each CC combination may be set to a CIF value of a specific representative cell (ref-cc) among cells in the corresponding CC combination. The ref-cc may be predefined or configured implicitly or explicitly.

- Method for predefining or implicitly configuring ref-cc: The ref-cc may be a cell with the lowest or highest index among {{cell #m}, M}. Alternatively, if a PCell, PSCell, or PUCCH SCell is included in the set, the corresponding cell may be selected as the ref-cc. A scheduling cell may also be selected as the ref-cc. Further, among cells scheduled by the m-cc DCI, a cell that serves as the reference of CIF values may be determined as the ref-cc.

- Method for explicitly configuring ref-cc: The ref-cc may be semi-statically configured through higher layer signaling such as RRC or a MAC-CE. The ref-cc may also be dynamically configured through DCI. In this case, the signaled cell index may indicate a cell based on the pre-defined rule (or implicit configuration) described above.

- Method 3B: The CIF value for each CC combination may be set to a value obtained by adding an offset to a CIF value of a specific representative cell (ref-cc) among cells in the corresponding CC combination. In this case, the ref-cc may be defined/configured using the method described in [Method 2B], and the offset may also be predefined or separately configured (e.g., through higher layer signaling).

When a CIF value is configured for each CC scheduled by m-cc DCI according to [Criterion 3], one of the following methods may be applied.

- Method 1C: The CIF value for each CC for m-cc DCI may be set to the same value as a CIF value for each CC configured for s-cc DCI. This method may be a simple method that does not require additional rules or signaling to determine the CIF value for the m-cc DCI.

- Method 2C: The CIF value for each CC for m-cc DCI may be independently configured. For example, the CIF value for each CC for the m-cc DCI may be set to a value different from a CIF value for each CC configured for s-cc DCI, and a separate rule may be required. For instance, a CIF field for the m-cc DCI may be defined separately from a CIF field for conventional s-cc DCI. This may help reduce the probability of PDCCH blocking.

- Method 3C: The CIF value for each CC for m-cc DCI may be set to a value obtained by adding an offset to a CIF value for each CC configured for s-cc DCI. The offset value may be predefined or configured separately (e.g., through higher layer signaling).

14

The number of PDCCH candidates for each AL n for m-cc DCI may also be configured differently according to the above criteria. That is, similar to [Criterion 1], SS set #s for the m-cc DCI may be configured, and the number of PDCCH candidates for each AL n may be configured for SS set #s. Alternatively, similar to [Criterion 2], the SS set and/or the number of PDCCH candidates for each AL n may be configured for each CC combination that is simultaneously scheduled by the m-cc DCI. Alternatively, similar to [Criterion 3], the SS set and/or the number of PDCCH candidates for each AL n may be configured for each CC scheduled by the m-cc DCI. Therefore, the SS set configuration for the m-cc DCI, and/or the number of PDCCH candidates for each AL n for the SS set, and/or the CIF value for the SS set may be configured based on the same set of CCs. For example, the SS set, the number of PDCCH candidates for each AL n, and the CIF value for the m-cc DCI may be configured based on the entire set/number of CCs capable of being scheduled by the m-cc DCI. Alternatively, the SS set, the number of PDCCH candidates for each AL n, and the CIF value may be configured for each CC combination capable of being simultaneously scheduled by the m-cc DCI. Alternatively, the SS set, the number of PDCCH candidates for each AL n, and the CIF value may be configured for each CC capable of being scheduled by the m-cc DCI.

Additionally, the CIF value may be configured/reconfigured through higher layer signaling such as RRC or a MAC-CE. Alternatively, the CIF value may be configured/reconfigured based on dynamic methods such as DCI. For example, when CA is (re)configured or when each SCell is activated, the CIF value for the cells may be configured/reconfigured.

[2] Method of Determining CCE Index of PDCCH Candidate for m-cc DCI

In Table 10, the equation for determining the CCE positions of PDCCH candidates according to the AL specified in 3GPP TS 38.213 has been presented.

A CIF value in DCI may be used to determine n CI (hereafter referred to as n_CI) used to determine the CCE positions of PDCCH candidates. In other words, n_CI may be determined through the CIF value. Thus, different n_CI (or CIF) values may be configured to establish different CCE positions for different scheduled CCs.

As described above, the CIF value for m-cc DCI may be set to a single value for the entire set of scheduled CCs, configured for each combination of scheduled CCs, or configured for each scheduled CC. When the CIF value for the m-cc DCI is configured, n_CI related to the CIF value may be determined by one of the following methods. The configuration of the CIF value may follow one of the methods described in [1].

- Method 1: The CIF value configured for m-cc DCI may be set to the value of n_CI for the m-cc DCI. Specifically, if Criterion 1 is used, the CIF value configured/determined through Method 1A/2A/3A may be set to the n_CI value. If Criterion 2 is used, the CIF value for each combination of scheduled CCs configured/determined through Method 1B/2B/3B may be set to the n_CI value (corresponding to the SS set configured for each CC combination). If Criterion 3 is used, the CIF value for each scheduled CC configured/determined through Method 1C/2C/3C may be set to the n_CI value (corresponding to the SS set configured for each CC).

    -> In this case, the CIF configured for the m-cc DCI may only be set to a value greater than or equal to a specific value. The specific value may be predefined or configured (e.g., via higher layer signaling). For example, the specific value may be '8'. Alternatively, the specific offset may be "the maximum CIF value configurable for s-cc DCI + 1." Alternatively, the specific offset may be "the maximum CIF value configured for scheduled cell(s) (for s-cc DCI-based scheduling for the cell(s)) that are configured to be scheduled by m-cc DCI transmitted on a scheduling cell + 1."
    -> Accordingly, it is possible to avoid an overlap between the SS sets (or the CCE positions of PDCCH candidates) for the s-cc DCI and m-cc DCI as much as possible.

- Method 2: The n_CI value for m-cc DCI may be configured by adding a specific offset to the CIF value set for the m-cc DCI. The offset may be predefined or configured (e.g., via higher layer signaling). For example, the specific offset may be '8'. Alternatively, the specific offset may be "the maximum CIF value configurable for s-cc DCI + 1." Alternatively, the specific offset may be "the maximum CIF value configured for scheduled cell(s) (for s-cc DCI-based scheduling for the cell(s)) that are configured to be scheduled by m-cc DCI transmitted on a scheduling cell + 1."

    -> For example, it is assumed that the CIF values configured for s-cc DCI are set to {0, 1, 2, 3}, and the CIF values for m-cc DCI are set to {0, 1, 2}. The n_CI values for the s-cc DCI (per CIF) may be set to be the same as the CIF values, i.e., {0, 1, 2, 3}. On the other hand, the n_CI values for the m-cc DCI (by CIF) may be set to n_CI = m-cc CIF + 8, i.e., {8, 9, 10} or n_CI = m-cc CIF + (3 + 1), i.e., {4, 5, 6}. This approach helps to avoid overlap between the SS sets (or the CCE positions of PDCCH candidates) for the s-cc DCI and m-cc DCI as much as possible. Accordingly, it is possible to avoid an overlap between the SS sets (or the CCE positions of PDCCH candidates) for the s-cc DCI and m-cc DCI as much as possible.

-> Additionally, the offset may be determined differently depending on the number of scheduled CCs. For example, in the case of [Criterion 2], different offsets may be determined/configured based on the number of CCs scheduled at once.

-> Additionally, for cell(s) where legacy DCI is capable of being configured (or monitored) among co-scheduled cells of m-cc DCI, a separate offset may be applied to the positions of PDCCH candidates (i.e., CCE index) for the cells (to separate the PDCCH candidate positions of the legacy DCI).

- Method 3: The CIF value configured for s-cc DCI may be set to the n_CI value for m-cc DCI.
- Method 4: The n_CI value for m-cc DCI may be set by adding a specific offset to the CIF value configured for s-cc DCI. The offset may be predefined or configured (e.g., through higher layer signaling). Additionally, the offset may be determined differently depending on the number of CCs scheduled at once by the m-cc DCI (the combination of cells scheduled simultaneously). For example, in the case of [Criterion 2], different offsets may be determined/configured based on the number of CCs scheduled at once.

A set of PDCCH candidates for m-cc DCI determined from Criteria 1/2/3 described in [1] and the CIF value (and/or n_CI) based thereon does not need to be restricted to being used only for m-cc DCI transmission/reception that schedules a specific cell (or a combination of cells). In other words, the PDCCH candidates (or PDCCH candidate set) that may be determined by a specific combination of 'Criteria 1/2/3,' 'CIF value determination methods,' and 'n_CI value determination methods' described in [1] may be shared (SS sharing) regardless of the cells (cell combinations) scheduled by the m-cc DCI. In other words, one or multiple (e.g., N) n_CI values are determined based on the SS set and/or CIF value configured according to Criteria 1/2/3. When the positions of the PDCCH candidates (or PDCCH candidate sets) respectively corresponding to the N n_CI values are determined, m-cc DCI that schedules a specific cell (or a combination of cells) (corresponding to a specific CIF/n_CI value) may be transmitted/received through any PDCCH candidate among the N PDCCH candidates (or PDCCH candidate sets). For example, m-cc DCI scheduling a cell (or a combination of cells) corresponding to a specific CIF/n_CI value of A may be transmitted/received through a PDCCH candidate (or PDCCH candidate set) corresponding to a different CIF/n_CI value of B, which is different from A.

[3] DCI Size Alignment Method for m-cc DCI

In NR, supported DCI formats may be distinguished based on a CRC-scrambled RNTI, or the DCI formats may be classified as fallback DCI or non-fallback DCI depending on the type of feature indicated by the DCI. There are various DCI formats supported in NR (e.g., DCI formats 0_0, 1_0, 0_1, 1_1, 0_2, 2_1, etc.), and the UE should perform blind detection on PDCCHs for DCIs of different sizes. Monitoring the PDCCH for various sizes of DCIs may be a significant burden for the UE (e.g., in terms of power consumption). To address this issue, NR has a specific rule for DCI formats with different sizes. Specifically, the rule is referred to as a "3+1" size budget. According to the "3+1" size budget, DCI scrambled with a C-RNTI may have up to three different sizes. When other RNTIs are included, the size of the DCI is limited to no more than four different sizes. To align the sizes of different DCI formats, NR specifies DCI size alignment methods shown in Table 12.

[Table 12]

| If necessary, padding or truncation shall be applied to the DCI formats according to the following steps executed in the order below: |
|---|
| Step 0: |
| - Determine DCI format 0_0 monitored in a common search space according to clause 7.3.1.1.1 where $N_{RB}^{UL, BWP}$ is the size of the initial UL bandwidth part. |
| - Determine DCI format 1_0 monitored in a common search space according to clause 7.3.1.2.1 where $N_{RB}^{DL, BWP}$ is given by |
| - the size of CORESET 0 if CORESET 0 is configured for the cell; and |
| - the size of initial DL bandwidth part if CORESET 0 is not configured for the cell. |
| - If DCI format 0_0 is monitored in common search space and if the number of information bits in the DCI format 0_0 prior to padding is less than the payload size of the DCI format 1_0 monitored in common search space for scheduling the same serving cell, a number of zero padding bits are generated for the DCI format 0_0 until the payload size equals that of the DCI format 1_0. |

(continued)

- If DCI format 0_0 is monitored in common search space and if the number of information bits in the DCI format 0_0 prior to truncation is larger than the payload size of the DCI format 1_0 monitored in common search space for scheduling the same serving cell, the bitwidth of the frequency domain resource assignment field in the DCI format 0_0 is reduced by truncating the first few most significant bits such that the size of DCI format 0_0 equals the size of the DCI format 1_0.

Step 1:

- Determine DCI format 0_0 monitored in a UE-specific search space according to clause 7.3.1.1.1 where $N_{RB}^{UL, BWP}$ is the size of the active UL bandwidth part.

- Determine DCI format 1_0 monitored in a UE-specific search space according to clause 7.3.1.2.1 where $N_{RB}^{DL, BWP}$ is the size of the active DL bandwidth part.

- For a UE configured with *supplementary Uplink* in *ServingCellConfig* in a cell, if PUSCH is configured to be transmitted on both the SUL and the non-SUL of the cell and if the number of information bits in DCI format 0_0 in UE-specific search space for the SUL is not equal to the number of information bits in DCI format 0_0 in UE-specific search space for the non-SUL, a number of zero padding bits are generated for the smaller DCI format 0_0 until the payload size equals that of the larger DCI format 0_0.

- If DCI format 0_0 is monitored in UE-specific search space and if the number of information bits in the DCI format 0_0 prior to padding is less than the payload size of the DCI format 1_0 monitored in UE-specific search space for scheduling the same serving cell, a number of zero padding bits are generated for the DCI format 0_0 until the payload size equals that of the DCI format 1_0.

- If DCI format 1_0 is monitored in UE-specific search space and if the number of information bits in the DCI format 1_0 prior to padding is less than the payload size of the DCI format 0_0 monitored in UE-specific search space for scheduling the same serving cell, zeros shall be appended to the DCI format 1_0 until the payload size equals that of the DCI format 0_0

Step 2:

- Determine DCI format 0_1 monitored in a UE-specific search space according to clause 7.3.1.1.2.

- Determine DCI format 1_1 monitored in a UE-specific search space according to clause 7.3.1.2.2.

- For a UE configured with *supplementary Uplink* in *ServingCellConfig* in a cell, if PUSCH is configured to be transmitted on both the SUL and the non-SUL of the cell and if the number of information bits in format 0_1 for the SUL is not equal to the number of information bits in format 0_1 for the non-SUL, zeros shall be appended to smaller format 0_1 until the payload size equals that of the larger format 0_1.

- If the size of DCI format 0_1 monitored in a UE-specific search space equals that of a DCI format 0_0/1_0 monitored in another UE-specific search space, one bit of zero padding shall be appended to DCI format 0_1.

- If the size of DCI format 1_1 monitored in a UE-specific search space equals that of a DCI format 0_0/1_0 monitored in another UE-specific search space, one bit of zero padding shall be appended to DCI format 1_1.

Step 2A:

- Determine DCI format 0_2 monitored in a UE-specific search space according to clause 7.3.1.1.3.

- Determine DCI format 1_2 monitored in a UE-specific search space according to clause 7.3.1.2.3.

- For a UE configured with *supplementary Uplink* in *ServingCellConfig* in a cell, if PUSCH is configured to be transmitted on both the SUL and the non-SUL of the cell and if the number of information bits in format 0_2 for the SUL is not equal to the number of information bits in format 0_2 for the non-SUL, zeros shall be appended to smaller format 0_2 until the payload size equals that of the larger format 0_2.

Step 3:

- If both of the following conditions are fulfilled the size alignment procedure is complete

- the total number of different DCI sizes configured to monitor is no more than 4 for the cell

- the total number of different DCI sizes with C-RNTI configured to monitor is no more than 3 for the cell

Step 4:

- Otherwise

Step 4A:

- Remove the padding bit (if any) introduced in step 2 above.

- Determine DCI format 1_0 monitored in a UE-specific search space according to clause 7.3.1.2.1 where $N_{RB}^{DL, BWP}$ is given by

(continued)

- the size of CORESET 0 if CORESET 0 is configured for the cell; and

- the size of initial DL bandwidth part if CORESET 0 is not configured for the cell.

- Determine DCI format 0_0 monitored in a UE-specific search space according to clause 7.3.1.1.1 where $N_{\rm RB}^{\rm UL,\,BWP}$ is the size of the initial UL bandwidth part.

- If the number of information bits in the DCI format 0_0 monitored in a UE-specific search space prior to padding is less than the payload size of the DCI format 1_0 monitored in UE-specific search space for scheduling the same serving cell, a number of zero padding bits are generated for the DCI format 0_0 monitored in a UE-specific search space until the payload size equals that of the DCI format 1_0 monitored in a UE-specific search space.

- If the number of information bits in the DCI format 0_0 monitored in a UE-specific search space prior to truncation is larger than the payload size of the DCI format 1_0 monitored in UE-specific search space for scheduling the same serving cell, the bitwidth of the frequency domain resource assignment field in the DCI format 0_0 is reduced by truncating the first few most significant bits such that the size of DCI format 0_0 monitored in a UE-specific search space equals the size of the DCI format 1_0 monitored in a UE-specific search space.

Step 4B:

- If the total number of different DCI sizes configured to monitor is more than 4 for the cell after applying the above steps, or if the total number of different DCI sizes with C-RNTI configured to monitor is more than 3 for the cell after applying the above steps

- If the number of information bits in the DCI format 0_2 prior to padding is less than the payload size of the DCI format 1_2 for scheduling the same serving cell, a number of zero padding bits are generated for the DCI format 0_2 until the payload size equals that of the DCI format 1_2.

- If the number of information bits in the DCI format 1_2 prior to padding is less than the payload size of the DCI format 0_2 for scheduling the same serving cell, zeros shall be appended to the DCI format 1_2 until the payload size equals that of the DCI format 0_2.

Step 4C:

- If the total number of different DCI sizes configured to monitor is more than 4 for the cell after applying the above steps, or if the total number of different DCI sizes with C-RNTI configured to monitor is

more than 3 for the cell after applying the above steps

- If the number of information bits in the DCI format 0_1 prior to padding is less than the payload size of the DCI format 1_1 for scheduling the same serving cell, a number of zero padding bits are generated for the DCI format 0_1 until the payload size equals that of the DCI format 1_1.

- If the number of information bits in the DCI format 1_1 prior to padding is less than the payload size of the DCI format 0_1 for scheduling the same serving cell, zeros shall be appended to the DCI format 1_1 until the payload size equals that of the DCI format 0_1.

The UE is not expected to handle a configuration that, after applying the above steps, results in

- the total number of different DCI sizes configured to monitor is more than 4 for the cell; or

- the total number of different DCI sizes with C-RNTI configured to monitor is more than 3 for the cell; or

- the size of DCI format 0_0 in a UE-specific search space is equal to DCI format 0_1 in another UE-specific search space; or

- the size of DCI format 1_0 in a UE-specific search space is equal to DCI format 1_1 in another UE-specific search space; or

- the size of DCI format 0_0 in a UE-specific search space is equal to DCI format 0_2 in another UE-specific search space when at least one pair of the corresponding PDCCH candidates of DCI formats 0_0 and 0_2 are mapped to the same resource; or

- the size of DCI format 1_0 in a UE-specific search space is equal to DCI format 1_2 in another UE-specific search space when at least one pair of the corresponding PDCCH candidates of DCI formats 1_0 and 1_2 are mapped to the same resource; or

- the size of DCI format 0_1 in a UE-specific search space is equal to DCI format 0_2 in the same or another UE-specific search space when at least one pair of the corresponding PDCCH candidates of DCI formats 0_1 and 0_2 are mapped to the same resource; or

- the size of DCI format 1_1 in a UE-specific search space is equal to DCI format 1_2 in the same or another UE-specific search space when at least one pair of the corresponding PDCCH candidates of DCI formats 1_1 and 1_2 are mapped to the same resource.

Since m-cc DCI may schedule multiple CCs simultaneously, the DCI size may increase compared to conventional s-cc DCI capable of scheduling only a single cell. To maintain the existing DCI size budget even with the introduction of the m-cc DCI, additional size alignment may be necessary. Size alignment due to the introduction of the m-cc DCI may be achieved through one (or a combination of two or more) of the following methods. The proposed methods may be applied specifically to UEs to which scheduling via m-cc DCI is configured.

- Method 1: The size of m-cc DCI for a DL assignment (i.e., scheduling a PDSCH) and the size of m-cc DCI for a UL grant (i.e., scheduling a PUSCH) may be aligned to be the same.

  -> [Method 1-1] If the sizes of m-cc DCIs for DL and UL are different, the size of the smaller DCI may be increased such that the sizes of the two DCIs are aligned to the larger DCI. To increase the size of the smaller m-cc DCI among the m-CC DCIs (for DL or UL), the following methods may be used, but the present disclosure is not limited thereto.
  -> (1-1-1) A zero (0) may be added to the end of a bitstream that constitutes DCI.
  -> (1-1-2) A zero (0) may be added to a specific field (e.g., frequency domain resource allocation (FDRA) field).
  -> (1-1-3) The size may be adjusted by changing the resolution of a specific field (e.g., FDRA field). For example, when the FDRA field of DL or UL DCI for m-cc scheduling is indicated in units of RB groups, the size of the FDRA field may be increased by reducing the size of the RB group if an increase in the size is required.
  -> [Method 1-2] If the sizes of m-cc DCIs for DL and UL are different, the size of the larger DCI may be reduced such that the sizes of the two DCIs are aligned to the smaller DCI. To reduce the size of the larger m-cc DCI among the m-CC DCIs (for DL or UL), the following methods may be used, but the present disclosure is not limited thereto.
  -> (1-2-1) The size of a specific field (e.g., FDRA field) may be reduced. For example, if a 4-bit reduction is needed, the last 4 bits of the FDRA field may be removed.
  -> (1-2-2) The size may be adjusted by changing the resolution of a specific field (e.g., FDRA field). For example, when the FDRA field of DL or UL DCI for m-cc scheduling is indicated in units of RB groups, the size of the FDRA field may be reduced by increasing the size of the RB group if a size reduction is needed.

- Method 2: Even if the sizes of m-cc DCIs for DL and UL scheduling are aligned through [Method 1], additional DCI size alignment may be required. In this case, additional size alignment of s-cc DCIs for DL and UL scheduling (e.g., DCI format 0_1 for DL and DCI format 1_1 for UL) may be performed. That is, for UEs where scheduling for multiple CCs is configured through m-cc DCI, the sizes of s-cc DCIs for both DL and UL may be aligned to be the same. In this case, the size alignment methods described in [Method 1-1] or [Method 1-2] may be applied.
- Method 3: The sizes of m-cc DCI and s-cc DCI for DL scheduling may be aligned to be the same. In this case, the size alignment methods described in [Method 1-1] or [Method 1-2] may be applied.
- Method 4: The sizes of m-cc DCI and s-cc DCI for UL scheduling may be aligned to be the same. In this case, the size alignment methods described in [Method 1-1] or [Method 1-2] may be applied.
- Method 5: The sizes of m-cc DCI (for DL or UL) CRC-scrambled with a C-RNTI and another DCI format CRC-scrambled with a different RNTI may be aligned to be the same. For example, the size of the m-cc DCI scrambled with the C-RNTI may be aligned to be the same as the size of DCI format 2_0 scrambled with an SFI-RNTI. In this case, the size alignment methods described in [Method 1-1] or [Method 1-2] may be applied.
- Method 6: When m-cc DCI is configured, s-cc DCI scheduling may be restricted to use a specific DCI format only (or be restricted from using a specific DCI format). For example, if DL scheduling is configured through m-cc DCI, s-cc scheduling may be restricted to be possible only through DCI format 1_2. In this case, for size alignment, the size of the m-cc DCI may be increased or reduced using [Method 1-1] or [Method 1-2]. Alternatively, conventional size alignment methods for s-cc DCI may also be applied. This method may be applicable to Option 3 or Option 3a among the [Operation Methods for m-cc DCI and s-cc DCI] described above.

When the UE operates based on Option 1/2/3 of the [Operation Methods for m-cc DCI and s-cc DCI], (the size of) m-cc DCI may be considered as (the size of) DCI associated with a specific reference cell among cells where m-cc DCI scheduling is configured to be performed (from the perspective of applying/performing DCI size alignment for each cell). Accordingly, Methods 1/2/3/4/5/6 may be applied in a DCI size alignment process associated with the reference cell. The reference cell may be a cell where m-cc DCI is transmitted, a cell with the lowest index, or a cell with the highest index.
In the DCI size alignment process due to the application of the m-cc DCI, the reference cell, which may be the target cell, may be predefined to satisfy a specific condition or explicitly indicated by the BS. For example, the specific condition may be a cell where N_crnti (the number of different DCI sizes of DCIs scrambled with a C-RNTI) is less than k (e.g., k=3) among scheduled cells that capable of being scheduled by the m-cc DCI.
In this case, if a condition of 'N_crnti<k' is satisfied for multiple cells among the scheduled cells, the reference cell may be determined as a cell with the smallest N_crnti value, a cell with the lowest index, or a cell with the highest index among the multiple cells, and then the DCI size alignment may be performed. If multiple cells have the smallest N_crnti value, the reference cell may be determined as a cell with the lowest index or a cell with the highest index among the multiple cells, and then the DCI size alignment may be performed. For example, assuming that when three cells are scheduled by m-cc DCI, the size alignment due to the m-cc DCI will be performed on a cell where N_crnti<3, if the N_crnti values for each scheduled cell are as follows: cell #1has N_crnti=2, cell #2 has N_crnti=1, and cell #3 has N_crnti=1, the DCI size alignment for the m-cc DCI may be performed on a cell with the lowest index or a cell with the highest index among cell #2 and cell #3 (or a cell corresponding to the ref-cc described in the [Operation Methods for m-cc DCI and s-cc DCI]).

Another example of the specific condition is that, among cells capable of being scheduled by m-cc DCI, a cell with the smallest difference between the (maximum) size of existing s-cc DCI for the cell and the size of the m-cc DCI may be determined as the target cell for the DCI size alignment.

In this case, if multiple scheduled cells have the smallest size difference, a cell with the lowest or highest index among the multiple cells (or a cell corresponding to the ref-cc described in the [Operation Methods for m-cc DCI and s-cc DCI]) may be determined as the reference cell, and the DCI size alignment may be performed for the cell.

Additionally, a method of maintaining the number of sizes for m-cc DCI and s-cc DCI configured for a specific cell below a specific number while maintaining the size budget of s-cc DCI as in the prior art (i.e., up to 3 for a C-RNTI) may be considered. In other words, it is possible to ensure that the sum of the number of sizes for m-cc DCI and s-cc DCI remains below a certain number. For example, when the number of cells configured for a specific cell is K, the DCI size budget may be defined such that the number of m-cc DCI sizes + sum of {number of s-cc DCI sizes} <= 3*K.

When the number of cells for which m-cc DCI is configurable M, if the DCI size budget is exceeded (for example, if the number of m-cc DCI sizes + sum of {s-cc DCI sizes} > 3*M), the DCI (size) associated with a specific reference cell among cells where m-cc DCI scheduling is to be performed (e.g., a cell where m-cc DCI is transmitted or a cell with the lowest (or highest) cell index) may be adjusted using the proposed methods. Alternatively, the size budget may be maintained by aligning the size between the m-cc DCI and one of s-cc DCIs (based on a predefined rule) or by aligning the size between DL s-cc DCI and UL s-cc DCI.

When the UE is configured with multi-cell scheduling through m-cc DCI, the UE may maintain the DCI size budget for each cell through the following process. For example, the UE may check whether the size of DCI scrambled with a C-RNTI among DCIs that need to be monitored for the cell exceeds 3. If the size of DCI exceeds, the UE may apply the DCI size alignment to ensure that the number of DCI sizes does not exceed 3. In the methods described below, the term "DCI size" may refer to the size of DCI scrambled with a C-RNTI. Additionally, the term "the number of DCI sizes" may refer to the number of different sizes of DCIs (scrambled with a C-RNTI) that the UE needs to monitor for a specific cell (or for the DL BWP of the cell). For example, the number of DCI sizes may refer to the number of different DCI sizes counted based on the number of PDCCH candidates configured for each SS set in the active DL BWP of the cell. In the methods described below, the term "legacy DCI" may refer to a DCI format for single-cell scheduling. Specifically, the legacy DCI may refer to both fallback DCI formats (e.g., DCI format 0_0 and DCI format 1_0) and non-fallback DCI formats (e.g., DCI format 0_1, DCI format 1_1, DCI format 0_2, and DCI format 1_2). Alternatively, the legacy DCI may refer to one of the two (for example, non-fallback DCI). In this case, the term "legacy DCI size" may refer to the payload size of the corresponding legacy DCI. In the methods described below, a cell where the DCI size budget is checked and (if necessary) the DCI size alignment is performed may be a specific cell among scheduled cells scheduled by m-cc DCI.

- Method-A

-> Step 1: For scheduled cells scheduled through m-cc DCI, the UE first checks the number of existing DCI sizes that need to be monitored for each cell, excluding the DCI size of the m-cc DCI. If the number of different sizes of existing DCI exceeds a DCI size budget, the UE performs alignment for the existing DCI sizes (as defined in the specifications) to determine the number of DCI sizes for each cell.
-> Step 2: The UE selects a specific reference cell from the scheduled cells scheduled through the m-cc DCI. The reference cell may be determined/selected as: "a scheduling cell where the m-cc DCI is transmitted", "a specific cell directly specified by RRC", "a cell with the lowest index among the scheduled cells", "a cell where the number of DCI sizes determined in Step 1 is less than '3' (and is also the minimum) if present (where the number '3' represents the DCI size budget for a C-RNTI) (if there are multiple such cells, then a specific one cell of the multiple cells (e.g., the cell with the lowest cell index)", or "a cell with the minimum number of DCI sizes determined in Step 1 (if there are multiple such cells, then a specific one of the multiple cells (e.g., the cell with the lowest cell index)."
-> Step 3: If the total number of DCI sizes (the sum of the m-cc DCI size and the legacy DCI size) for the reference cell determined in Step 2 exceeds '3', the UE proceeds to Step 4. Otherwise, no additional DCI size alignment is performed. In this case, the UE needs to move to Step 4 in the following cases, but the present disclosure is not limited thereto.

■ For example, the cases may include a case where the number of existing DCI sizes for the reference cell is '3' and the number of m-cc DCI sizes is '1'. That is, the cases may include a case where only one of DL m-cc DCI for scheduling a PDSCH or UL m-cc DCI for scheduling a PUSCH is configured for the cell, or a case where (even if both are configured) the DL m-cc DCI and the UL m-cc DCI have the same DCI size.

■ For example, the cases may include a case where the number of existing DCI sizes for the reference cell is '2' and the number of m-cc DCI sizes is '2'. That is, the cases may include a case where both DL m-cc DCI and UL m-cc DCI are configured for the cell and the DCI sizes of the two DCIs are different.

■ For example, the cases may include a case where the number of existing DCI sizes for the reference cell is '3' and the number of m-cc DCI sizes is '2' (that is, the cases may include a case where both DL m-cc DCI and UL m-cc DCI are configured for the cell, and the DCI sizes of the two DCIs are different.)

-> Step 4: If there is a possibility of performing additional legacy DCI size alignment for the reference cell determined in Step 2 (in addition to Step 1), the size alignment is performed. As a result, when the total number of DCI sizes (the sum of the m-cc DCI size and the legacy DCI size) becomes '3' or less, the entire DCI size alignment process may be ended. However, when there is no possibility of performing the additional legacy DCI size alignment for the reference cell (in addition to Step 1), or when the total number of DCI sizes exceeds '3' even if there is a possibility of performing the additional legacy DCI size alignment and thus, the additional legacy DCI size alignment is performed, the DCI size alignment may be performed using one of the methods from Method 1 to Method 6 in Section [3] of the present disclosure, which describes the size alignment methods for m-cc DCI. As a result, if the total number of DCI sizes (the sum of the m-cc DCI size and the legacy DCI size) becomes '3' or less, the entire DCI size alignment process may be ended.

- Method-B

-> Step 1: A specific reference cell is selected from scheduled cells scheduled through m-cc DCI. The reference cell may be determined/selected as "a scheduling cell where the m-cc DCI is transmitted," "a specific cell directly specified by RRC," or "a cell with the lowest index among the scheduled cells."

-> Step 2: For the reference cell determined in Step 1, the UE first checks the number of existing DCI sizes that need to be monitored for the cell, excluding the DCI size of the m-cc DCI. If the number of different sizes of existing DCI exceeds a DCI budget (e.g., '3'), alignment for the existing DCI sizes (as defined in the specifications) is performed. As a result, if the total number of DCI sizes for the cell, including the m-cc DCI size, exceeds '3', the UE proceeds to Step 3. Otherwise, no additional DCI size alignment is performed. Alternatively, for the reference cell determined in Step 1, a value obtained by subtracting the number of m-cc DCI sizes from the DCI budget (e.g., '3') may be defined as "A." The UE checks the number of existing DCI sizes that need to be monitored for the cell. If the number of different sizes of the existing DCI exceeds A, the UE performs alignment for the existing DCI sizes (as defined in the specifications). As a result, if the total number of DCI sizes for the cell, including the m-cc DCI size, exceeds '3' (and the number of legacy DCI sizes still exceeds A), the UE proceeds to Step 3. Otherwise, no additional DCI size alignment is performed.

-> Step 3: Additional DCI size alignment is performed using one of the methods from Method 1 to Method 6 in Section [3], which describes the size alignment methods for m-cc DCI.

Additionally, when m-cc DCI is configured, the DCI size budget is checked using the number of different DCI sizes counted based on the number of PDCCH candidates configured for each SS set in an active search space set group (SSSG) for the active DL BWP of each (scheduled) cell, and the aforementioned size alignment may be performed. Alternatively, when m-cc DCI is configured, the DCI budget is checked using the number of different DCI sizes counted based on the number of PDCCH candidates configured for all SS sets in units of co-scheduled cell combinations capable of being scheduled by the m-cc DCI (or for the union of all co-scheduled cell combinations), and the aforementioned size alignment may be performed.

[4] Additional DCI Size Alignment Methods for m-cc DCI

[4-1]
Based on the content defined in Section 7.3.1.0 (DCI size alignment) of TS 38.212, which is described in [3], the DCI size alignment process may be simply represented as shown in the following table.

[Table 13]

| DCI format | DCI size | 1st step | 2nd step | 3rd step |
|---|---|---|---|---|
| 1_0/0_0 on CSS | A | A | A | A |

(continued)

| DCI format | DCI size | 1st step | 2nd step | 3rd step |
|---|---|---|---|---|
| 1_0/0_0 on USS | B | A | A | A |
| 0_1 | C | C | C | max(C,D) |
| 1_1 | D | D | D | max(C,D) |
| 0_2 | E | E | max(E,F) | max(E,F) |
| 1_2 | F | F | max(E,F) | max(E,F) |

In Table 13, A, B, C, D, E, and F represent (different) DCI sizes of the corresponding DCI formats. The first step, second step, and third step indicate a process of adjusting the size of each DCI format in sequence. In Table 13, max(C,D) refers to a process of aligning the sizes of DCI format 0_1 and DCI format 1_1 based on the larger size when the sizes of the two DCI formats differ. Similarly, max(E,F) refers to a process of aligning the sizes of DCI format 0_2 and DCI format 1_2 based on the larger size when the sizes of the two DCI formats differ. Additionally, the second step and third step correspond to Step 4B and Step 4C, respectively, described in TS 38.212. Each step in Table 13 may be understood as an operation performed when the DCI size budget for different DCI sizes is exceeded even after performing the previous step (e.g., when the number of different DCI sizes exceeds 4 or when the number of different DCI sizes scrambled with a C-RNTI exceeds 3). For example, after the sizes of each DCI format (configured for the UE/cell) are determined in the first step, if the number of determined sizes exceeds the DCI size budget, the second step may be performed. Alternatively, if the DCI size budget is still exceeded after adjusting the sizes of DCI format 0_2 and 1_2 in the second step, the third step may be performed.

The following methods may be (additionally) introduced as DCI size alignment methods for m-cc DCI. In the methods described below, m-cc DCI for DL and m-cc DCI for UL may be expressed as follows for convenience. DCI (format) 0_X refers to a DCI format that schedules a PUSCH for multiple cells, while DCI (format) 1_X refers to a DCI format that schedules a PDSCH for multiple cells.

[4-2]
For a UE (or cell) configured with multi-cell (PDSCH/PUSCH) scheduling through m-cc DCI, if the number of DCI sizes (for all configured DCI formats) exceeds the DCI size budget after the third step is performed, a fourth step may be executed as follows.

Fourth step: If the DCI sizes of DCI 0_X and DCI 1_X are different, the smaller size may be adjusted to match the larger size. The specific methods described in [3] may be applied to align the sizes.

This may be represented as shown in Table 14. The parts that are added/modified compared to Table 13 are marked with '#'.

[Table 14]

| DCI format | length | 1st step | 2nd step | 3rd step | # 4th step |
|---|---|---|---|---|---|
| 1 0/0 0 on CSS | A | A | A | A | A |
| 1_0/0_0 on USS | B | A | A | A | A |
| 0_1 | C | C | C | max(C,D) | # max(C,D) |
| 1_1 | D | D | D | max(C,D) | # max(C,D) |
| 0_2 | E | E | max(E,F) | max(E,F) | # max(E,F) |
| 1_2 | F | F | max(E,F) | max(E,F) | # max(E,F) |
| # 0_X | #G | #G | #G | #G | # max(G,H) |
| # 1_X | #H | #H | #H | #H | # max(G,H) |

In other words, for the sizes of all DCI formats configured for the UE/cell (i.e., after the first step), the sizes of the DCI formats may be adjusted (or modified) in the following order until the DCI size budget is satisfied.

(1) Size alignment between DCI 0_2 and DCI 1_2
(2) Size alignment between DCI 0_1 and DCI 1_1
(3) Size alignment between DCI 0_X and DCI 1_X

Alternatively, the priority of size alignment between DCI formats may be changed, thereby allowing for the procedure in the following order.

[Table 15]

| DCI format | length | 1st step | 2nd step | 3rd step | # 4th step |
|---|---|---|---|---|---|
| 1 0/0 0 on CSS | A | A | A | A | A |
| 1_0/0_0 on USS | B | A | A | A | #A |
| 0_1 | C | C | C | # C | # max(C,D) |
| 1_1 | D | D | D | #D | # max(C,D) |
| 0_2 | E | E | # E | # max(E,F) | # max(E,F) |
| 1_2 | F | F | # F | # max(E,F) | # max(E,F) |
| # 0_X | # G | # G | # max(G,H) | # max(G,H) | # max(G,H) |
| # 1_X | # H | # H | # max(G,H) | # max(G,H) | # max(G,H) |

In other words, for the sizes of all DCI formats configured for the UE/cell (i.e., after the first step), the sizes of the DCI formats may be adjusted (or modified) in the following order until the DCI size budget is satisfied.

(1) Size alignment between DCI 0_X and DCI 1_X
(2) Size alignment between DCI 0_2 and DCI 1_2
(3) Size alignment between DCI 0_1 and DCI 1_1

Alternatively, the priority of size alignment between DCI formats may be changed, thereby allowing for the procedure in the following order.

[Table 16]

| DCI format | length | 1st step | 2nd step | 3rd step | # 4th step |
|---|---|---|---|---|---|
| 1 0/0 0 on CSS | A | A | A | A | A |
| 1_0/0_0 on USS | B | A | A | A | A |
| 0_1 | C | C | C | $\#_C$ | # max(C,D) |
| 1_1 | D | D | D | #D | # max(C,D) |
| 0_2 | E | E | max(E,F) | # max(E,F) | # max(E,F) |
| 1_2 | F | F | max(E,F) | # max(E,F) | # max(E,F) |
| # 0_X | # G | # G | # G | # max(G,H) | # max(G,H) |
| # 1_X | # H | # H | # H | # max(G,H) | # max(G,H) |

In other words, for all DCI format sizes configured for the UE/cell (i.e., after the first step), the sizes of the DCI formats may be adjusted (or modified) in the following order until the DCI size budget is satisfied.

(1) Size alignment between DCI 0_2 and DCI 1_2
(2) Size alignment between DCI 0_X and DCI 1_X
(3) Size alignment between DCI 0_1 and DCI 1_1

[4-3]
If the number of DCI sizes exceeds the DCI size budget even after the fourth step is performed according to the size alignment methods shown in Tables 14 to 16, a fifth step may be introduced. In other words, the fifth step is used when the sizes of DCI format 0_1 and 1_1 are the same (e.g., max(C,D)), the sizes of DCI format 0_2 and 1_2 are the same (e.g., max(E,F)), and the sizes of DCI format 0_X and 1_X are the same (e.g., max(G,H)), in order to reduce the three different sizes (i.e., max(C,D), max(E,F), max(G,H)) to two (or fewer). The following three different methods may be used.

- Fifth step (Alt 1): The sizes of max(C,D) and max(E,F) in the fourth step are aligned. That is, max{max(C,D), max(E,F)} may be performed. In this case, there may be three different DCI sizes for a C-RNTI (after the fifth step): A, max {max(C,D), max(E,F)}, and max(G,H).
- Fifth step (Alt 2): The sizes of max(C,D) and max(G,H) in the fourth step are aligned. That is, max{max(C,D), max(G,H)} may be performed. In this case, there may be three different DCI sizes for a C-RNTI (after the fifth step): A, max{max(C,D), max(G,H)}, and max(E,F).
- Fifth step (Alt 3): The sizes of max(E,F) and max(G,H) in the fourth step are aligned. That is, max{max(E,F), max(G,H)} may be performed. In this case, there may be three different DCI sizes for a C-RNTI (after the fifth step): A, max {max(E,F), max(G,H)}, and max(C,D).

In this case, the specific methods described in [3] may be applied to align the DCI sizes (for the three scenarios).

Additionally, when the DCI sizes are determined according to the above fourth step and/or fifth step, a 2-bit field may be used in each piece of DCI (or in some DCI formats) (e.g., m-cc DCI). When max{max(C,D), max(E,F)}, max {max(C,D), max(G,H)}, or max{max(E,F), max(G,H)} have the same DCI size, the UE may distinguish each DCI format using the 2-bit field. In this case, the 2-bit field may be an extension or modification of a 1-bit "DCI format indicator" defined in conventional DCI formats, or the 2-bit field may be separately defined.

[4-4]

After the fourth step is performed using the size alignment methods shown in Tables 14 to 16, the BS may restrict DCI formats configured for the UE/cell to avoid exceeding the DCI size budget, and the UE may not expect the DCI size budget to be exceeded. That is, the BS does not configure a "specific DCI format" (for the cell) as "specific conditions," and the UE may operate under the assumption that the "specific DCI format" is not configured for the cell under the "specific conditions." In this case, the "specific conditions" and/or the "specific DCI format" (which is not expected to be configured) may be predefined or configured through higher layer signaling/commands such as RRC. For example, for a UE/cell configured with DCI 0_X (or 1_X), it may be defined/configured such that DCI format 0_2 (or 1_2) is not simultaneously configured (if the DCI size budget is exceeded). Alternatively, for a UE/cell configured with DCI 0_X/1_X, it may be defined/configured such that DCI format 0_1 (or 1_1) is not simultaneously configured (if the DCI size budget is exceeded). Alternatively, for a UE/cell configured with DCI 0_2 (or 1_2), it may be defined/configured such that DCI format 0_X (or 1_X) is not simultaneously configured (if the DCI size budget is exceeded). In another example, for a UE/cell configured with DCI 0_X/1_X, it may be defined/configured such that DCI 0_0 (or 1_0) is not (simultaneously) configured.

The method described in [4-4] may be uniformly applied to each/all scheduled cells in multi-cell scheduling via m-cc DCI. Alternatively, the method described in [4-4] may be applied only to some/specific cells (or a set of cells) among scheduled cells. In this case, the specific cells may be predefined or configured separately.

This method may be applied after the fourth step of the size alignment process described above, but the present disclosure is not limited thereto. That is, the method may also be applied after some/specific steps (or only to some/specific steps) in the process. For example,

- If DCI 0_X/1_X is configured for a (specific) UE/cell and DCI 0_0/1_0 is not configured, the second step, third step, and fourth step may be applied sequentially for Tables 14 to 16, thereby performing the DCI size alignment for the cell (until the DCI size budget is not exceeded).
- If DCI 0_X/1_X is configured for a (specific) UE/cell and DCI 0_1/1_1 is not configured, the first step, second step, and fourth step may be applied sequentially for Table 14, thereby performing the DCI size alignment for the cell (until the DCI size budget is not exceeded). Alternatively, the first step, second step, and third step may be applied sequentially for Tables 15 to 16, thereby performing the DCI size alignment for the cell (until the DCI size budget is not exceeded).
- If DCI 0_X/1_X is configured for a (specific) UE/cell and DCI 0_2/1_2 is not configured, the first step, third step, and fourth step may be applied sequentially in Tables 14 to 16, thereby perform the DCI size alignment for the cell (until the DCI size budget is not exceeded). Alternatively, the first step, second step, and fourth step may be applied sequentially for Table 15, thereby performing the DCI size alignment for the cell (until the DCI size budget is not exceeded).

[4-5]

After the fourth step is performed using the size alignment methods shown in Tables 14 to 16, the UE may not monitor specific/some DCI formats to ensure the DCI size budget is not exceeded. That is, under "specific conditions," the UE may ignore (or drop) a "specific DCI format" configured (for the cell) and may not monitor a related PDCCH (in other words, the UE may not monitor a PDCCH for the DCI format, may not perform BD/CCE counting therefor, and may not perform DCI size counting for the DCI). In this case, the "specific conditions" and/or the "specific DCI format" (which is not monitored) may be predefined or configured through higher layer signaling/commands such as RRC. For example, for a UE/cell configured with DCI 0_X (or 1_X), it may be defined/configured not to monitor DCI format 0_2 (or 1_2) if the DCI size budget is exceeded. Alternatively, for a UE/cell configured with DCI 0_X/1_X, it may be defined/configured not to monitor DCI format 0_1 (or 1_1) if the DCI size budget is exceeded. Alternatively, for a UE/cell configured with DCI 0_2 (or 1_2), it may be defined/configured not to monitor DCI format 0_X (or 1_X) if the DCI size budget is exceeded. In another example, for a UE/cell configured with DCI 0_X/1_X, it may be defined/configured not to monitor DCI 0_0 (or 1_0).

This method may be uniformly applied to each/all scheduled cells in multi-cell scheduling via m-cc DCI. Alternatively, the method may be applied only to some/specific cells (or a set of cells) among the scheduled cells. In this case, these specific cells may be predefined or configured separately.

The method may be applied after the fourth step of the size alignment process described above (but the present disclosure is not limited thereto). The method may also be applied after some/specific steps (or only to some/specific steps) in the process. For example,

- If DCI 0_X/1_X is configured for a (specific) UE/cell and the UE is defined/configured not to monitor DCI 0_0/1_0 for the cell, the second step, third step, and fourth step may be applied sequentially for Tables 14 to 16, thereby performing the DCI size alignment for the cell (until the DCI size budget is not exceeded).
- If DCI 0_X/1_X is configured for a (specific) UE/cell and the UE is defined/configured not to monitor DCI 0_1/1_1 for the cell, the first step, second step, and fourth step may be applied sequentially for Table 14, thereby performing the DCI size alignment for the cell (until the DCI size budget is not exceeded). Alternatively, the first step, second step, and third step may be applied sequentially for Tables 15 and 16, thereby performing the DCI size alignment for the cell (until the DCI size budget is not exceeded).
- If DCI 0_X/1_X is configured for a (specific) UE/cell and the UE is defined/configured not to monitor DCI 0_2/1_2 for the cell, the first step, third step, and fourth step may be applied sequentially for Tables 14 to 16, thereby performing the DCI size alignment for the cell (until the DCI size budget is not exceeded). The first step, second step, and fourth step may be applied sequentially for Table 15, thereby performing the DCI size alignment for the cell (until the DCI size budget is not exceeded).

[4-6]

Additionally, after performing some or all of the aforementioned DCI size alignment steps, the UE is not expected to handle the following cases shown in in Table 17.

[Table 17]

| |
|---|
| - the total number of different DCI sizes configured to monitor is more than 4 for the cell; or |
| - the total number of different DCI sizes with C-RNTI configured to monitor is more than 3 for the cell; or |
| - the size of DCI format 0_0 in a UE-specific search space is equal to DCI format 0_X in another UE-specific search space; or |
| - the size of DCI format 1_0 in a UE-specific search space is equal to DCI format 1_X in another UE-specific search space; or |
| - the size of DCI format 0_0 in a UE-specific search space is equal to DCI format 0_X in another UE-specific search space when at least one pair of the corresponding PDCCH candidates of DCI formats 0_0 and 0_X are mapped to the same resource; or |
| - the size of DCI format 1_0 in a UE-specific search space is equal to DCI format 1_X in another UE-specific search space when at least one pair of the corresponding PDCCH candidates of DCI formats 1_0 and 1_X are mapped to the same resource; or |
| - the size of DCI format 0_1 in a UE-specific search space is equal to DCI format 0_X in the same or another UE specific search space when at least one pair of the corresponding PDCCH candidates of DCI formats 0_1 and 0_X are mapped to the same resource; or |
| - the size of DCI format 1_1 in a UE-specific search space is equal to DCI format 1_X in the same or another UE specific search space when at least one pair of the corresponding PDCCH candidates of DCI formats 1_1 and 1_X are mapped to the same resource; or |
| - the size of DCI format 0_2 in a UE-specific search space is equal to DCI format 0_X in another UE-specific search space when at least one pair of the corresponding PDCCH candidates of DCI formats 0_2 and 0_X are mapped to the same resource; or |
| - the size of DCI format 1_2 in a UE-specific search space is equal to DCI format 1_X in another UE-specific search space when at least one pair of the corresponding PDCCH candidates of DCI formats 1_2 and 1_X are mapped to the same resource |

The contents of the present disclosure are not limitedly applied only to UL and/or DL signal transmission and reception. For example, the contents of the present disclosure may also be used for direct communication between UEs. In this document, the term based station (BS) may be understood as a concept including a relay node as well as a BS. For example, the operations of a BS described in the present disclosure may be performed by a relay node as well as the BS.

It is obvious that each of the examples of the proposed methods may also be included as one implementation method of the present disclosure, and thus each example may be regarded as a kind of proposed method. Although the above-described proposed methods may be implemented independently, some of the proposed methods may be combined and implemented. In addition, it may be regulated that information on whether the proposed methods are applied (or information on rules related to the proposed methods) is transmitted from the BS to the UE in a predefined signal (e.g., physical layer signaling or higher layer signaling).

Implementation examples

FIG. 4 is a flowchart illustrating a signal monitoring method according to embodiments of the present disclosure.

Referring to FIG. 4, the embodiment performed by a UE may include determining a CCE index corresponding to a PDCCH candidate (S401) and monitoring the PDCCH candidate based on the CCE index (S403).

The monitoring of the PDCCH candidate may be performed based on one or more of the operations described in Sections [1] to [4].

As described above, a cell that schedules a PDSCH or PUSCH, that is, a cell where a PDCCH carrying DCI is received, is referred to as a scheduling cell. A cell where a PDSCH or PUSCH scheduled by the received PDCCH is actually transmitted is referred to as a scheduled cell.

A DCI format for scheduling a PDSCH or PUSCH on a single scheduled cell (DCI format for single-cell DCI) is referred to as a first DCI format. A DCI format for scheduling PDSCHs or PUSCHs on multiple scheduled cells (DCI format for multi-cell DCI) is referred to as a second DCI format. In the present disclosure, DCI and DCI format may be used interchangeably.

Referring to Table 10, when the DCI format to be monitored by the UE is the first DCI format, the value of $n\_CI$ is used to determine the CCE index. The $n\_CI$ value is a CIF value, and the CIF is included in the DCI format. Therefore, if the PDCCH candidate to be monitored by the UE is for the first DCI format, the CCE index is configured (or determined) based on the CIF value included in the DCI format.

According to Criterion 2 of Section [1], a CIF value is configured for each combination of CCs capable of being scheduled simultaneously by multi-cell DCI. Therefore, if the PDCCH candidate to be monitored by the UE is for the second DCI format, the CCE index is configured (or determined) independently for each combination of scheduled cells. Specifically, according to Method 1B of Section [1], the CIF value is configured independently for each combination of scheduled cells. However, the value is only used to determine the CCE index, and the second DCI format may actually include no CIF. For example, a separate field is used to indicate a combination of scheduled cells scheduled by the second DCI format. The $n\_CI$ value required for determining the CCE index is independently configured based on the combination of scheduled cells even if the second DCI format includes no CIF. Therefore, for the second DCI format, the $n\_CI$ value may correspond to a specific value configured for each combination of scheduled cells rather than a CIF value in the DCI. The specific value may be referred to, for example, as a cell set indicator value rather than a CIF value.

Additionally, referring to Section [3], after a DCI size budget is satisfied by a DCI size alignment process, the UE performs monitoring of the PDCCH candidate for the DCI format. Specifically, referring to Step 1 of Method-B in Section [3], DCI size alignment is performed for a specific reference cell selected from among scheduled cells.

Referring to Step 3 of Table 12, if the total number of different DCI sizes configured to be monitored for a cell exceeds 4 (if the total number of different DCI sizes configured to monitor is no more than 4 for the cell), or if the total number of different DCI sizes associated with a C-RNTI configured to be monitored for the cell exceeds 3 (if the total number of different DCI sizes with C-RNTI configured to monitor is no more than 3 for the cell), the DCI size budget is exceeded, which may increase the PDCCH monitoring burden on the UE. To avoid this issue, the DCI size alignment is performed.

Referring to Step 2 of Method-B in Section [3], if the total number of DCI sizes, excluding the multi-cell DCI (the second DCI format), for the reference cell exceeds 3, the DCI size alignment for the legacy DCI (the first DCI format) is performed. Since "3" in Step 2 of Method-B in Section [3] is related to DCI formats associated with the C-RNTI, if the total number of DCI sizes configured to be monitored for the reference cell except for the second DCI format exceeds 4, or if the total number of DCI sizes associated with the C-RNTI configured to be monitored for the reference cell except for the second DCI format exceeds 3, the DCI size alignment process for the legacy DCI formats (the first DCI size alignment process) is performed.

The DCI size alignment process for the legacy DCI formats is disclosed in Table 13 of Section [4]. Specifically, the first DCI size alignment process for the legacy DCI formats is performed in the following order: the DCI size alignment between DCI format 1_0 and DCI format 0_0, the DCI size alignment between DCI format 0_2 and DCI format 1_2, and the DCI size alignment between DCI format 0_1 and DCI format 1_1.

After the first DCI size alignment process, if the total number of DCI sizes including the multi-cell DCI (the second DCI format) for the reference cell does not exceed 3, the DCI size alignment process is completed. Since "3" in Step 2 of Method-B in Section [3] is related to the DCI formats associated with the C-RNTI, if the total number of DCI sizes configured to be monitored for the reference cell including the second DCI format does not exceed 4, and if the total number of DCI sizes associated with the C-RNTI configured to be monitored for the reference cell including the second DCI format does not exceed 3, the DCI size alignment process is completed at Step 2.

After the first DCI size alignment process, if the total number of DCI sizes for the reference cell including the multi-cell DCI (the second DCI format) exceeds 3, Step 3 of Method-B in Section [3] is performed. According to Step 3 of Method-B in Section [3], the DCI size alignment process is performed including the multi-cell DCI. Therefore, if the total number of DCI sizes configured to be monitored for the reference cell including the second DCI format exceeds 4, or if the total number of DCI sizes associated with the C-RNTI configured to be monitored for the reference cell including the second DCI format exceeds 3, the DCI size alignment process for the second DCI format (the second DCI size alignment process) is performed.

Referring to Step 3 of Method-B in Section [3], the second DCI size alignment process may be performed based on one or more combinations of Methods 1 to 6 described in Section [3].

For example, according to Method 1 in Section [3], the DCI size alignment process is performed between multi-cell DCI for PDSCH scheduling and multi-cell DCI for PUSCH scheduling. Therefore, according to Method 1 in Section [3], the second DCI size alignment process includes aligning the size of a DCI format used for scheduling PDSCHs on multiple scheduled cells with the size of a DCI format used for scheduling PUSCHs on multiple scheduled cells to be the same.

In another example, according to Method 3 in Section [3], the DCI size alignment process is performed between multi-cell DCI for PDSCH scheduling and single-cell DCI for PDSCH scheduling. Therefore, according to Method 4 in Section [3], the second DCI size alignment process includes aligning the size of a DCI format used for scheduling PDSCHs on multiple scheduled cells with the size of a DCI format used for scheduling a PDSCH on a single scheduled cell to be the same.

In another example, according to Method 4 in Section [3], the DCI size alignment process is performed between multi-cell DCI for PUSCH scheduling and single-cell DCI for PUSCH scheduling. Therefore, according to Method 4 in Section [3], the second DCI size alignment process includes aligning the size of a DCI format used for scheduling PUSCHs on multiple scheduled cells with the size of a DCI format used for scheduling a PUSCH on a single scheduled cell to be the same.

In addition to the operations described in FIG. 4, one or more of the operations described in FIGS. 1 to 3 and/or the operations for 'DCI for scheduling PDSCHs or PUSCHs on multiple serving cells' and described in Sections [1] to [5] may be combined and additionally performed.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

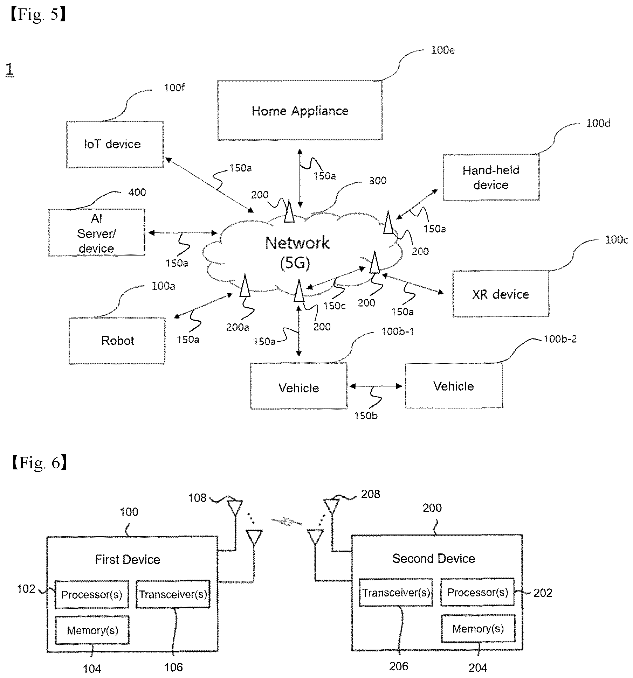

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

<u>Example of wireless device to which the present disclosure is applied</u>

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

_Example of use of wireless device to which the present disclosure is applied_

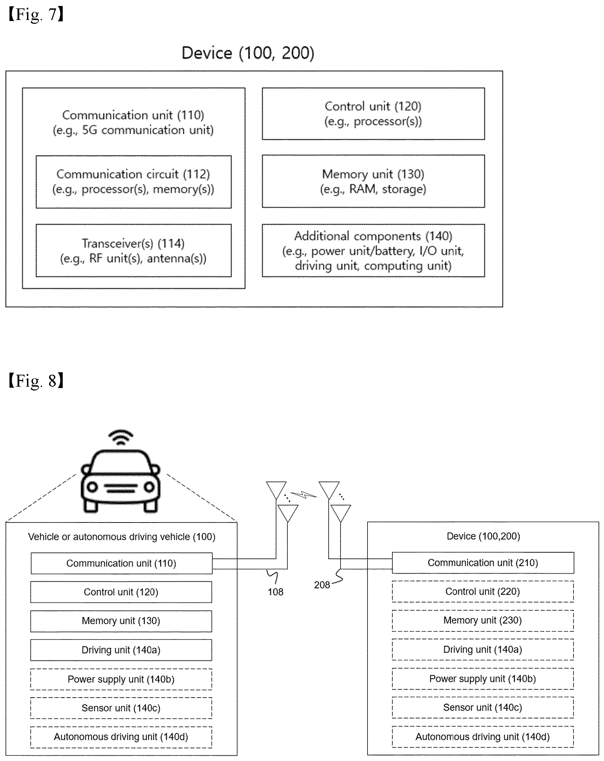

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 5), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

As described above, the present disclosure is applicable to various wireless communication systems.

## Claims

1. A method of monitoring a control signal by a user equipment (UE) in a wireless communication system, the method comprising:

   determining a control channel element (CCE) index corresponding to a physical downlink control channel (PDCCH) candidate; and
   monitoring the PDCCH candidate for a downlink control information (DCI) format on a scheduling cell based on the CCE index,
   wherein, based on that the DCI format is a first DCI format for scheduling a physical downlink shared channel (PDSCH) or a physical uplink shared channel (PUSCH) on a single scheduled cell, the CCE index is configured based on a value of a carrier indicator field (CIF) included in the DCI format, and
   wherein, based on that the DCI format is a second DCI format for scheduling PDSCHs or PUSCHs on a plurality of scheduled cells, the CCE index is configured independently for each specific combination of the plurality of scheduled cells.

2. The method of claim 1, wherein based on that the DCI format is the second DCI format, the DCI format does not include the CIF.

3. The method of claim 1, wherein the second DCI format schedules PDSCHs or PUSCHs on all or some of scheduled cells belonging to the specific combination.

4. The method of claim 1, wherein the DCI format satisfies a DCI size budget through a DCI size alignment process.

5. The method of claim 4, wherein the DCI size alignment process is performed for one reference cell among the plurality of scheduled cells.

6. The method of claim 5, wherein the DCI size alignment process comprises, based on that a total number of DCI sizes configured to be monitored for the reference cell except for the second DCI format exceeds 4 or that a total number of DCI sizes associated with a cellradio network temporary identifier (C-RNTI) configured to be monitored for the reference cell except for the second DCI format exceeds 3, performing a first DCI size alignment process for legacy DCI formats, and
   wherein the first DCI size alignment process is performed in an order of:

   DCI size alignment between DCI format 1_0 and DCI format 0_0;
   DCI size alignment between DCI format 0_2 and DCI format 1_2; and
   DCI size alignment between DCI format 0_1 and DCI format 1_1.

7. The method of claim 6, wherein the DCI size alignment process comprises, based on that a total number of DCI sizes configured to be monitored for the reference cell including the second DCI format exceeds 4 or that a total number of DCI sizes associated with a cellradio network temporary identifier (C-RNTI) configured to be monitored for the reference cell including the second DCI format exceeds 3, performing a second DCI size alignment process for the second DCI format.

8. The method of claim 7, wherein the second DCI size alignment process comprises aligning a size of a DCI format for scheduling PDSCHs on a plurality of scheduled cells with a size of a DCI format for scheduling PUSCHs on plurality of scheduled cells to be equal to each other.

9. The method of claim 7, wherein the second DCI size alignment process comprises aligning a size of a DCI format for scheduling PDSCHs on a plurality of scheduled cells with a size of a DCI format for scheduling a PDSCH on a single scheduled cell to be equal to each other.

10. The method of claim 7, wherein the second DCI size alignment process comprises aligning a size of a DCI format for scheduling PUSCHs on a plurality of scheduled cells with a size of a DCI format for scheduling a PUSCH on a single scheduled cell to be equal to each other.

11. A user equipment (UE) configured to monitor a signal in a wireless communication system, the UE comprising:

at least one transceiver;
at least one processor; and
at least one memory operably connected to the at least one processor and storing instructions that, when executed, cause the at least one processor to perform specific operations comprising:

determining a control channel element (CCE) index corresponding to a physical downlink control channel (PDCCH) candidate; and
monitoring the PDCCH candidate for a downlink control information (DCI) format on a scheduling cell based on the CCE index,
wherein, based on that the DCI format is a first DCI format for scheduling a physical downlink shared channel (PDSCH) or a physical uplink shared channel (PUSCH) on a single scheduled cell, the CCE index is configured based on a value of a carrier indicator field (CIF) included in the DCI format, and
wherein, based on that the DCI format is a second DCI format for scheduling PDSCHs or PUSCHs on a plurality of scheduled cells, the CCE index is configured independently for each specific combination of the plurality of scheduled cells.

12. An apparatus for a user equipment (UE), the apparatus comprising:

at least one processor; and
at least one computer memory operably connected to the at least one processor and configured to, when executed, cause the at least one processor to perform operations comprising:

determining a control channel element (CCE) index corresponding to a physical downlink control channel (PDCCH) candidate; and
monitoring the PDCCH candidate for a downlink control information (DCI) format on a scheduling cell based on the CCE index,
wherein, based on that the DCI format is a first DCI format for scheduling a physical downlink shared channel (PDSCH) or a physical uplink shared channel (PUSCH) on a single scheduled cell, the CCE index is configured based on a value of a carrier indicator field (CIF) included in the DCI format, and
wherein, based on that the DCI format is a second DppCI format for scheduling PDSCHs or PUSCHs on a plurality of scheduled cells, the CCE index is configured independently for each specific combination of the plurality of scheduled cells.

13. A computer-readable non-volatile storage medium comprising at least one computer program configured to cause at least one processor to perform operations comprising:

determining a control channel element (CCE) index corresponding to a physical downlink control channel (PDCCH) candidate; and
monitoring the PDCCH candidate for a downlink control information (DCI) format on a scheduling cell based on the CCE index,
wherein, based on that the DCI format is a first DCI format for scheduling a physical downlink shared channel (PDSCH) or a physical uplink shared channel (PUSCH) on a single scheduled cell, the CCE index is configured based on a value of a carrier indicator field (CIF) included in the DCI format, and
wherein, based on that the DCI format is a second DCI format for scheduling PDSCHs or PUSCHs on a plurality of scheduled cells, the CCE index is configured independently for each specific combination of the plurality of scheduled cells.

【Fig. 1】

| | |
|---|---|
| ...... | One Frame (10ms) ...... |

| | |
|---|---|
| ...... | Half-Frame (5ms)    Half-Frame (5ms) ...... |

Subframe 0 (1ms) ...... Subframe 4 (1ms)   Subframe 5 (1ms) ...... Subframe 9 (1ms)

Subframe (1ms)

| 15KHz | Slot (14 symbols) |
|---|---|

1ms

| 30KHz | Slot 0 (14 symbols) | Slot 1 |
|---|---|---|

500us

| 60KHz | Slot 0 (14 symbols) | Slot 1 | Slot 2 | Slot 3 |
|---|---|---|---|---|

250us

| 120KHz | Slot 0 (14 symbols) | Slot 1 | Slot 2 | Slot 3 | Slot 4 | Slot 5 | Slot 6 | Slot 7 |
|---|---|---|---|---|---|---|---|---|

125us

【Fig. 2】

【Fig. 3】

One slot

【Fig. 4】

Determine CCE index corresponding to PDCCH candidate — S401

Monitor PDCCH candidate based on CCE index — S403

【Fig. 5】

1

【Fig. 6】

【Fig. 7】

Device (100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

【Fig. 8】

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100,200)

Communication unit (210)

Control unit (220)

Memory unit (230)

Driving unit (140a)

Power supply unit (140b)

Sensor unit (140c)

Autonomous driving unit (140d)

# EP 4 518 518 A1

<table>
<tr><td colspan="2" style="text-align:center">**INTERNATIONAL SEARCH REPORT**</td><td>International application No.<br>**PCT/KR2023/005793**</td></tr>
</table>

**A.    CLASSIFICATION OF SUBJECT MATTER**

**H04W 72/23**(2023.01)i; **H04W 72/12**(2009.01)i; **H04L 5/00**(2006.01)i; **H04L 1/00**(2006.01)i

According to International Patent Classification (IPC) or to both national classification and IPC

**B.    FIELDS SEARCHED**

Minimum documentation searched (classification system followed by classification symbols)

H04W 72/23(2023.01); H04W 24/08(2009.01); H04W 28/18(2009.01); H04W 36/30(2009.01); H04W 72/04(2009.01); H04W 72/08(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PDCCH candidate, CCE index, scheduling cell, scheduled cell, DCI format, monitoring, CIF, PDSCH, PUSCH

**C.    DOCUMENTS CONSIDERED TO BE RELEVANT**

| Category* | Citation of document, with indication, where appropriate, of the relevant passages | Relevant to claim No. |
|---|---|---|
| A | US 2021-0409983 A1 (QUALCOMM INCORPORATED) 30 December 2021 (2021-12-30)<br>See paragraphs [0081]-[0090] and [0290]; and figure 4. | 1-13 |
| A | SAMSUNG. Corrections to the introduction of multicast-broadcast services in NR. R1-2200814, 3GPP TSG RAN WG1 #107bis-e, e-Meeting. 02 February 2022.<br>See section 10.1. | 1-13 |
| A | SPREADTRUM COMMUNICATIONS. Discussion on cross-carrier scheduling from SCell to Pcell. R1-2100794, 3GPP TSG RAN WG1 #104-e, e-Meeting. 18 January 2021.<br>See sections 2-3. | 1-13 |
| A | US 2018-0027574 A1 (LG ELECTRONICS INC.) 25 January 2018 (2018-01-25)<br>See paragraphs [0324]-[0333]; and figure 11. | 1-13 |
| A | KR 10-2021-0028721 A (VIVO MOBILE COMMUNICATION CO., LTD.) 12 March 2021 (2021-03-12)<br>See paragraphs [0096]-[0108]; and figure 4. | 1-13 |

☐ Further documents are listed in the continuation of Box C.          ☑ See patent family annex.

| | |
|---|---|
| \*    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **16 August 2023** | **17 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2023/005793** |

| Patent document cited in search report | | | Publication date (day/month/year) | Patent family member(s) | | | Publication date (day/month/year) |
| --- | --- | --- | --- | --- | --- | --- | --- |
| US | 2021-0409983 | A1 | 30 December 2021 | BR | 112022025636 | A2 | 17 January 2023 |
| | | | | CN | 115956351 | A | 11 April 2023 |
| | | | | EP | 4173217 | A1 | 03 May 2023 |
| | | | | KR | 10-2023-0029617 | A | 03 March 2023 |
| | | | | WO | 2021-263170 | A1 | 30 December 2021 |
| US | 2018-0027574 | A1 | 25 January 2018 | CN | 107113603 | A | 29 August 2017 |
| | | | | CN | 107113603 | B | 19 March 2021 |
| | | | | EP | 3247060 | A1 | 22 November 2017 |
| | | | | EP | 3247060 | B1 | 17 March 2021 |
| | | | | EP | 3247061 | A1 | 22 November 2017 |
| | | | | EP | 3247061 | B1 | 01 March 2023 |
| | | | | JP | 2018-506246 | A | 01 March 2018 |
| | | | | JP | 2019-165461 | A | 26 September 2019 |
| | | | | JP | 6954948 | B2 | 27 October 2021 |
| | | | | KR | 10-2017-0095275 | A | 22 August 2017 |
| | | | | KR | 10-2017-0095920 | A | 23 August 2017 |
| | | | | KR | 10-2053228 | B1 | 06 December 2019 |
| | | | | US | 10433318 | B2 | 01 October 2019 |
| | | | | US | 10448412 | B2 | 15 October 2019 |
| | | | | US | 10462800 | B2 | 29 October 2019 |
| | | | | US | 10667276 | B2 | 26 May 2020 |
| | | | | US | 10674519 | B2 | 02 June 2020 |
| | | | | US | 10869321 | B2 | 15 December 2020 |
| | | | | US | 2017-0374569 | A1 | 28 December 2017 |
| | | | | US | 2017-0374653 | A1 | 28 December 2017 |
| | | | | US | 2018-0020443 | A1 | 18 January 2018 |
| | | | | US | 2020-0015240 | A1 | 09 January 2020 |
| | | | | US | 2020-0029338 | A1 | 23 January 2020 |
| | | | | US | 2021-0092748 | A1 | 25 March 2021 |
| | | | | WO | 2016-114560 | A1 | 21 July 2016 |
| | | | | WO | 2016-114561 | A1 | 21 July 2016 |
| | | | | WO | 2016-114562 | A1 | 21 July 2016 |
| | | | | WO | 2016-114563 | A1 | 21 July 2016 |
| KR | 10-2021-0028721 | A | 12 March 2021 | CN | 110740479 | A | 31 January 2020 |
| | | | | CN | 110740479 | B | 08 June 2021 |
| | | | | CN | 113316258 | A | 27 August 2021 |
| | | | | EP | 3813420 | A1 | 28 April 2021 |
| | | | | EP | 3813420 | B1 | 26 July 2023 |
| | | | | JP | 2021-531695 | A | 18 November 2021 |
| | | | | JP | 7195404 | B2 | 23 December 2022 |
| | | | | US | 2021-0144746 | A1 | 13 May 2021 |
| | | | | WO | 2020-015643 | A1 | 23 January 2020 |